(19) Europäisches Patentamt
European Patent Office
Office européen des brevets

(11) **EP 2 028 525 A1**

(12) **EUROPÄISCHE PATENTANMELDUNG**

(43) Veröffentlichungstag:
**25.02.2009 Patentblatt 2009/09**

(51) Int Cl.:
***G02B 26/08*** (2006.01)

(21) Anmeldenummer: **08405191.1**

(22) Anmeldetag: **31.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **31.07.2007 EP 07405226**

(71) Anmelder: **SERCALO MICROTECHNOLOGY LTD.
9494 Schaan (LI)**

(72) Erfinder:
• **Marxer, Cornel
2000 Neuchatel (CH)**
• **Noell, Wilfried
2000 Neuchatel (CH)**

(74) Vertreter: **Rüfenacht, Philipp Michael et al
Keller & Partner
Patentanwälte AG
Schmiedenplatz 5
Postfach
3000 Bern 7 (CH)**

(54) **Mikrospiegelvorrichtung**

(57) Ein Mikrospiegelvorrichtung (21) umfasst einen elektrostatisch aktuierbaren Mikrospiegel (25) sowie einen Rahmen (27) und eine Basis (9). Der Mikrospiegel (25) ist über den Rahmen (27) kardanisch in der Basis (9) aufgehängt, indem er über zwei Gelenkverbindungen mit dem Rahmen (27) und der Rahmen (27) über zwei weitere Gelenkverbindungen mit der Basis (9) verbunden ist. Auf diese Weise kann der Mikrospiegel (25) durch Anlegen einer elektrischen Spannung an entsprechend positionierte Elektroden akutiert, d. h. eine oder beide der durch die zwei Paare von Gelenkverbindungen definierten Drehachsen geschwenkt werden. Der Mikrospiegel ist nun derart aufgehängt, dass die beiden Gelenkverbindungen, welche eine der beiden Drehachse definieren, je eine Torsionsfeder und die beiden anderen Gelenkverbindungen, welche die andere der beiden Drehachsen definieren, je eine Biegefeder umfassen.

Fig. 2

# Beschreibung

## Technisches Gebiet

Die Erfindung betrifft eine Mikrospiegelvorrichtung mit einer aus einer Halbleiterschicht herausstrukturierten Spiegelanordnung, welche eine Basisstruktur, einen Mikrospiegel und eine zwischen der Basisstruktur und dem Mikrospiegel angeordnete Rahmenstruktur umfasst, der Mikrospiegel über zwei eine erste Drehachse des Mikrospiegels definierende Gelenkverbindungen mit der Rahmenstruktur und die Rahmenstruktur über zwei eine zweite Drehachse definierende Gelenkverbindungen mit der Basisstruktur verbunden ist, wobei die beiden Drehachsen einen Winkel grösser als 0 Grad einschliessen. Weiter betrifft die Erfindung ein entsprechendes Verfahren zur Herstellung einer solchen Mikrospiegelvorrichtung.

## Stand der Technik

Für die Verarbeitung von optischen Signalen werden in modernen Telekommunikationsanlagen häufig MEMS (mikro-elektromechanische Systeme) Produkte eingesetzt. Solche Systeme werden mit Verfahren hergestellt, welche den Verfahren zur Herstellung von integrierten Schaltkreisen sehr ähnlich sind. Für die gesteuerte Weiterleitung von optischen Signalen werden beispielsweise Mikrospiegel verwendet, welche beispielsweise aus einer dünnen Halbleiterschicht, beispielsweise einer dünnen Siliziumschicht, herausstrukturiert werden. Solche Mikrospiegel sind derart ausgebildet und mit dem sie umgebenden Halbleitermaterial verbunden, dass sie gezielt um eine oder zwei Achsen geschwenkt werden können. Auf diese Weise kann ein auf den Mikrospiegel fallender Lichtstrahl gezielt an einen bestimmten Ort reflektiert werden, beispielsweise auf eine aus einer Mehrzahl von Linsen, welche den reflektierten Lichtstrahl beispielsweise in eine bestimmte aus einer Mehrzahl von optischen Fasern einkoppelt.

Es gibt verschiedene Möglichkeiten, solche Mikrospiegel zu aktuieren, d. h. um eine oder mehrere seiner Drehachsen zu drehen bzw. schwenken. Eine Möglichkeit besteht darin, thermoelektrische oder piezoelektrische Effekte zu nutzen, wie dies beispielsweise in der EP 1 057 068 A1 offenbart ist. Der hier offenbarte Spiegel 11 ist über zwei Torsionsbalken 12, 12' mit zwei Biegebalken 14 und 14' verbunden, wobei die Torsionsbalken und die Biegebalken eine gemeinsame Drehachse des Spiegels definieren. Auf den Biegebalken 14, 14' befindet sich ein thermomechanischer oder piezoelektrischer Biegewandler 15. Durch anlegen einer elektrischen Spannung werden im Biegebalken mechanische Spannungen induziert, welche eine Biegung der Biegebalken zur Folge haben. Durch periodisches Ändern der angelegten Spannung wird der Spiegel in eine Schwingung um die durch die Torsions- und Biegebalken definierte Drehachse des Spiegels versetzt. Wird die Frequenz der anregenden Biegeschwingung so gewählt, dass sie einer Resonanzfrequenz der Torsionsschwingung entspricht, kann eine besonders grosse Schwindungsamplitude erreicht werden. Auf den Torsionsbalken 12, 12' befindet sich jeweils ein piezoresistiver bzw. ein piezoelektrischer Dünnschichtwandler 16 zur Detektion der Torsionsschwindung. Zur Übertragung der elektrischen Signale zu den bzw. von den Dünnschichtwandlern 16 bzw. den Biegewandlern 15 sind die Biegebalken mit einer entsprechenden Metallisierung versehen.

Bei derart piezo- oder thermoelektrisch aktuierten Spiegeln besteht das Problem, dass die Systeme eine Hysterese aufweisen können, welche nachteilig für eine präzise Ansteuerung des Spiegels ist. Dies wirkt sich insbesondere dann negativ aus, wenn der Spiegel nicht wie bei der EP 1 057 068 A1 in Schwingung versetzt wird, sondern jeweils nur gesteuert einzelne Drehbewegungen des Spiegels ausgeführt werden sollen. Zudem können die mechanischen Spannungen in den Biegebalken ein Fliessen und plastische Verformungen der Metallbeschichtung zur Folge haben, welche auch eine Verformung des beschichteten Substrats nach sich ziehen. Dadurch ergibt sich ein verändertes Schaltverhalten der Spiegel und eine präzise Aktuierung ist nicht mehr möglich.

Aus der US 6,935,759 B1 ist ein weiterer Mikrospiegel bekannt. Dieser ist kardanisch aufgehängt, wobei sämtliche Gelenke im Wesentlichen identisch aufgebaut sind. Jedes der Gelenke umfasst eine Mehrzahl von Torsionsbalken (60-66), welche parallel zur gewünschten Drehachse ausgerichtet und untereinander jeweils durch steife Streben verbunden sind.

Nachteilig bei dieser Konstruktion ist, dass die Bewegungen des Spiegels um seine beiden Drehachsen nicht entkoppelt sind. D. h. bei einer Aktuierung des Spiegels um eine seiner Drehachsen wird der Spiegel auch um seine zweite Drechachse gedreht, welche im Wesentlichen senkrecht zur ersten Drehachse steht. Zudem wird durch diese kombinierten Torsionsaufhängungen relativ viel Platz benötigt, sodass mehrere solcher Spiegel nicht wie oft gewünscht mit einem hohen Füllfaktor (engl: fill factor) in einem platzsparenden Array angeordnet werden können.

Aus der WO 2005/006052 A1 (Philips) ist eine Scanning-Vorrichtung eines Projektors bekannt, bei welcher eine Drehplatte (53) mittels zwei Torsionselementen (55) an einer Basis (56). befestigt ist. In der Drehplatte ist eine Ausnehmung, in welcher mittels zweier Biegeelementen (30a, 30b) eine Reflexionsfläche (31) befestigt ist. Die Reflexionsfläche wird nun derart aktuiert, dass sie bei ihrer Resonanzfrequenz oszilliert. Nachteilig ist hierbei, dass durch die Auslegung der Vorrichtung als Scanner eine gezielte Aktuierung der Reflektionsfläche nach oben oder unten mit Halten der Position nicht möglich ist. Zudem sind die Bewegungen um die beiden Drehachsen nicht sauber voneinander entkoppelt und die Anordnung benötigt durch die aussen liegenden Torsionselemente viel Platz. Des Weiteren können sich Druck- bzw. Zugbelastungen negativ auf die Funktionsweise des Scanning-Elements auswirken.

Weiter sind auch derartige Mikrospiegel bekannt, welche mittels vier Torsionsbalken kardanisch aufgehängt sind. D. h. der Spiegel ist mit zwei Torsionsbalken an einem Rahmen und der Rahmen mit zwei weiteren Torsionsbalken am umgebenden Halbleitermaterial befestigt. Wenn nun äussere Zug- oder Druckkräfte beispielsweise in Richtung jener Drehachse wirken, welche durch die beiden den Rahmen mit dem umgebenden Halbleitermaterial verbindenden Torsionsfedern definiert wird, können sich im Vergleich zum unbelasteten Fall die Resonanzfrequenzen dieser Federn und damit das Schaltverhalten des Spiegels entscheidend ändern.

Um bei solchen Mikrospiegeln ein präzises Schaltverhalten zu erreichen, werden solche Spiegelanordnungen typischerweise mit einer Rückkopplung versehen, um die Position des Spiegels stabil, d. h. driftfrei zu halten. Solche Anordnungen sind dann infolge des hierfür notwendigen Platzbedarfs meist auch nicht für eine dichte Arrayanordnung geeignet.

D. h. die bisher bekannten, auf MEMS Technologie basierenden Mikrospiegel sind entweder für eine dichte Arrayanordnung oder für ein gezieltes Auslenken in eine bestimmte Richtung und Halten der Auslenkung ungeeignet, benötigen viel Platz, deren Bewegungen um ihre Drehachsen sind nicht voneinander entkoppelt oder sie brauchen ein Rückkoppel-System um die Position des Spiegels stabil (driftfrei) zu halten.

**Darstellung der Erfindung**

Aufgabe der Erfindung ist es daher, eine dem eingangs genannten technischen Gebiet zugehörende Mikrospiegelvorrichtung sowie ein entsprechendes Herstellungsverfahren zu schaffen, welche die oben genannten Nachteile vermeiden und welche insbesondere ein driftfreies, präzise reproduzierbares Schaltverhalten aufweisen, wobei mehrere solcher Mikrospiegelvorrichtungen auch sehr dicht in einem Array, d. h. mit hohem Füllfaktor, angeordnet werden können.

Die Lösung der Aufgabe ist durch die Merkmale des Anspruchs 1 definiert. Die aus einer Halbleiterschicht herausstrukturierte Mikrospiegelvorrichtung umfasst eine Spiegelanordnung mit einer Basisstruktur, einem Mikrospiegel und einer zwischen der Basisstruktur und dem Mikrospiegel angeordneten Rahmenstruktur. Der Mikrospiegel ist über zwei eine erste Drehachse des Mikrospiegels definierende Gelenkverbindungen mit der Rahmenstruktur und die Rahmenstruktur über zwei eine zweite Drehachse definierende Gelenkverbindungen mit der Basisstruktur verbunden. Die beiden Drehachsen schliessen hierbei einen Winkel grösser als 0 Grad, vorzugsweise einen Winkel von im Wesentlichen 90 Grad, ein. Erfindungsgemäss umfassen nun jene Gelenkverbindungen, welche die erste Drehachse definieren, die Torsionsfedern und jene Gelenkverbindungen, welche die zweite Drehachse definieren, die Biegefedern. D. h.

die Biegefedern sind sozusagen die äusseren Verbindungen, welche die Rahmenstruktur mit der umgebenden Basisstruktur verbinden und die Torsionsfedern sind die inneren Verbindungen, welche die Rahmenstruktur mit dem Spiegel verbinden.

Die Aktuierung des Mikrospiegels erfolgt bevorzugt elektrostatisch. Hierbei wird in der Nähe des Mikrospiegels ein elektrisches Feld erzeugt, welches auf einen Teil des Spiegels einwirkt. Da der Spiegel typischerweise eine Dotierung, d. h. geladene Teilchen aufweist, wird entsprechend jener Teil des Spiegels vom elektrischen Feld angezogen oder abgestossen und der Spiegel auf diese Weise um eine oder mehrere seiner Drehachsen geschwenkt.

Die erfindungsgemässe Ausbildung der Aufhängung des Mikrospiegels an der Rahmenstruktur bzw. der Rahmenstruktur an der Basisstruktur hat den Vorteil, dass die Bewegungen, d. h. die Drehungen des Mikrospiegels um seine beiden Drehachsen, praktisch vollständig voneinander entkoppelt sind. Weiter ist es so, dass die Biegebalken in Richtung der von ihnen definierten Drehachse nur sehr wenig Platz benötigen. Dadurch kann zumindest in dieser Richtung Platz eingespart und damit auch ein hoher Füllfaktor erreicht werden. Indem der Mikrospiegel vorzugsweise elektrostatisch aktuiert wird, können zudem die Hystereseeffekte einer piezo- oder thermoelektrischen Aktuierung vermieden werden.

Zudem entstehen auf diese Weise bei mechanischen Spannungen in Richtung der durch die Biegefedern definierten Drehachse keine mechanischen Belastungen des Spiegels, da solche Kräfte nicht auf den Mikrospiegel übertragen werden. D. h. das Schaltverhalten des Mikrospiegels ändert sich auch bei einer mechanischen Druck- oder Zugbelastung, beispielsweise infolge einer Temperaturänderung oder infolge anderer Einflüsse des Gehäuses wie etwa durch das Packaging, kaum bzw. nicht.

Insgesamt resultiert daher ein präzises, reproduzierbares und driftfreies Schaltverhalten des Mikrospiegels. Dies macht eine Rückkopplung völlig überflüssig. Durch die geringere mechanische Belastung der Anordnung kann gleichzeitig auch deren Lebensdauer erhöht werden.

Die Rahmenstruktur wird nachfolgend auch einfach als Rahmen und die Basisstruktur einfach als Basis bezeichnet.

Bei der vorgängig erwähnten Halbleiterschicht handelt es sich bevorzugt um eine Siliziumschicht, beispielsweise die Siliziumschicht eines Siliziumwafers, denn die für die Bearbeitung solcher Siliziumschichten benötigten Prozesse und Verfahren sind aus der Fertigung von Halbleiterchips sehr gut bekannt. Eine solche Mikrospiegelvorrichtung wird daher nachfolgend auch als Spiegelchip bezeichnet.

Diese Anordnung, bei welcher die Biegefedern die äusseren und die Torsionsfedern die inneren Verbindungen sind, hat gegenüber der umgekehrten Anordnung den Vorteil, dass die gesamte Mikrospiegelvorrichtung über die Biegefedern quasi vom Rest der Basis entkoppelt ist. Druck- und Zugbelastungen in Richtung der durch die Biegefedern definierten Drehachse des Spiegels werden durch die Biegefedern aufgefangen. Druck- und Zugbelastungen in Richtung der anderen Drehachse, d. h. in Richtung der durch die Torsionsfedern definierten Drehachse, werden überhaupt nicht auf den Spiegel übertragen, da die einzige Verbindung zwischen Basis und Spiegel über die Biegefedern verläuft. Da zudem die Torsionsfedern, welche in ihrer Längsrichtung relativ viel Platz beanspruchen, innen liegen, kann der gesamte Platzbedarf der Spiegelanordnung minimiert werden. Die Torsionsfedern können dann nämlich zumindest teilweise aus der Rahmenstruktur sowie aus der Spiegelfläche herausstrukturiert werden und benötigen auf diese Weise keinen zusätzlichen Platz in ihrer Längsrichtung.

Die Biegefedern können im Prinzip eine Mehrzahl von senkrecht zu ihrer Drehachse angeordnete, untereinander verbundene Biegebalken umfassen. Um den Platzbedarf jedoch möglichst gering zu halten, umfassen die Biegefedern vorzugsweise genau einen senkrecht zur zweiten Drehachse angeordneten Biegebalken, welcher an einem ersten Ende mit dem Rahmen und an einem zweiten Ende mit der Basis verbunden ist. Dadurch können mechanische Spannungen in Richtung der zweiten Drehachse, welche beispielsweise infolge thermischer Spannungen oder infolge Spannungen, die vom Packaging herrühren, durch einen Versatz der Biegebalken kompensiert werden.

Bei einer bevorzugten Ausführungsform der Erfindung haben die Biegebalken eine Höhe im Bereich von 2 bis 20 Mikrometern, eine Breite im Bereich von 1 bis 4 Mikrometern und eine Länge im Bereich von 50 bis 300 Mikrometern. Es sind zwar durchaus auch andere Dimensionierungen der Biegebalken möglich, aber diese Werte haben sich im Hinblick auf die gewünschten Eigenschaften (Eigenfrequenzen, Steifigkeit, Herstellbarkeit, Entkopplung der Drehungen um die beiden Drehachsen des Spiegels) als vorteilhaft erwiesen. Besonders bevorzugt weisen die Biegebalken eine Höhe von etwa 5 Mikrometern, eine Breite von etwa 2 Mikrometern und eine Länge von etwa 150 Mikrometern auf.

Auch die Torsionsfedern können im Prinzip eine Mehrzahl von parallel zu der von ihnen definierten Drehachse angeordneten Torsionsbalken umfassen. Aber auch hier ist es im Sinne einer einfacheren Fertigung bevorzugt, wenn jede Torsionsfeder genau einen parallel zur ersten Drehachse angeordneten Torsionsbalken umfasst. Dieser ist an einem ersten Ende mit dem Mikrospiegel und an einem zweiten Ende mit dem Rahmen verbunden.

Bei einer bevorzugten Ausführungsvariante ist der Torsionsbalken via einen quer zu diesem angeordneten Querbalken mit dem Rahmen verbunden, wobei der Torsionsbalken etwa mittig mit dem Querbalken und der Querbalken mit seinen beiden Enden mit dem Rahmen verbunden ist.

Die Torsionsbalken weisen hierbei bevorzugt eine Höhe im Bereich von 2 bis 20 Mikrometern, eine Breite im Bereich von 0,5 bis 3 Mikrometern und eine Länge im Bereich von 50 bis 300 Mikrometern auf. Auch die Torsionsbalken können, je nach gewünschter Anwendung, natürlich hiervon abweichende Dimensionierungen aufweisen. Allerdings haben sich Torsionsbalken mit Abmessungen in den oben genannten Bereichen im Hinblick auf die gewünschten Eigenschaften (Eigenfrequenzen, Steifigkeit, Herstellbarkeit, Entkopplung der Drehungen um die beiden Drehachsen des Spiegels) ebenfalls als vorteilhaft erwiesen. Besonders bevorzugt haben die Torsionsbalken eine Höhe von etwa 5 Mikrometern, eine Breite von etwa 1 Mikrometer und eine Länge von etwa 130 Mikrometern. Die Torsionsbalken sind daher bevorzugt etwa gleich hoch wie die Biegebalken, sind aber nur etwa halb so breit und typischerweise etwas kürzer wie diese.

Je nach dem verwendeten Halbleitermaterial ist die Reflektivität mehr oder weniger hoch und kann je nach Anwendung sogar ausreichend sein. Um die Reflektivität zu erhöhen, kann diejenige Oberfläche des Mikrospiegels, welche zur Weiterleitung eines Lichtstrahls verwendet wird, mit einer Metallisierung versehen werden. D. h. der Mikrospiegel weist auf wenigstens einer Oberfläche der Halbleiterschicht eine Metallbeschichtung auf. Wird der Spiegel nur einseitig mit Metall beschichtet, kann dies eine Verformung der Spiegeloberfläche zur Folge haben, d. h. die Spiegeloberfläche ist gekrümmt. Besonders bevorzugt werden daher beide Oberflächen der Halbleiterschicht, d. h. beide Spiegeloberflächen mit einer Metallbeschichtung versehen. Dadurch kann der Krümmungsradius der Spiegeloberfläche deutlich vergrössert werden, sodass ein Spiegel mit einer möglichst ebenen Oberfläche resultiert.

Für die Metallisierung kann im Prinzip ein beliebiges Metall wie beispielsweise Gold, Silber, Aluminium, Kupfer oder irgend ein anderes Metall mit einer geeigneten Reflektivität für den gewünschten Spektralbereich verwendet werden, wobei sich Gold aufgrund seiner diesbezüglichen sowie weiterer Eigenschaften bestens eignet und daher bevorzugt verwendet wird.

Typischerweise wird die gesamte Spiegelfläche mit einer Metallschicht versehen. Bei einer bevorzugten Ausführungsform der Erfindung bleiben jedoch die mechanisch beanspruchten Stellen des Mikrospiegels, insbesondere die Torsions- und die Biegefedern, welche in der Regel ebenfalls beschichtet werden, frei von der Metallbeschichtung. Dies wird dadurch erreicht, dass die nicht zu beschichtenden Bereiche vor dem Aufbringen der Metallbeschichtung abgedeckt werden bzw. abgedeckt bleiben.

Würden die mechanisch beanspruchten Bereiche, beispielsweise die Federn, ebenfalls metallisiert, könnten sich die Federn bei einer plastischen Verformung oder bei einem Fliessen des Metalls ebenfalls verformen. Diese Verformungen sind zumindest teilweise irreversibel und haben eine Verformung der Feder zur Folge, wodurch die Feder selbst ohne mechanische Belastung einen Offset im Krümmungswinkel aufweist. Entsprechend würde das Schaltverhalten des Spiegels negativ beeinflusst - es driftet. Indem die Federn nicht metallisiert werden, können diese unerwünschten Effekte vermieden werden.

Auch die Rahmenstruktur oder die Basisstruktur können metallisiert werden. Wichtig ist lediglich, dass die Federn oder allenfalls weitere, mechanisch beanspruchte Bereiche nicht metallisiert werden.

Wie bereits erwähnt, kann eine solche Mikrospiegelvorrichtung mittels Verfahren, wie sie von der Herstellung integrierter Schaltungen bekannt sind, aus einer Halbleiterschicht wie beispielsweise einer Siliziumschicht hergestellt, d. h. herausstrukturiert, werden. Während sich hierfür grundsätzlich jede Art von Wafern eignet, sind SOI (silicon on insulator) Wafer hierfür besonders geeignet. Solche SOI Wafer umfassen eine sogenannte Deckschicht (device layer) aus Silizium mit einer Dicke im Bereich von einigen wenigen bis einigen Hundert Mikrometern, eine Isolationsschicht (buried oxide layer oder auch BOX layer) aus Siliziumoxid mit einer Dicke im Bereich von Bruchteilen bis einigen wenigen Mikrometern sowie einer Substratschicht (handle layer) wiederum aus Silizium mit einer Dicke im Bereich von einigen Dutzend bis einigen Hundert Mikrometern. Die Siliziumschichten sind hierbei typischerweise dotiert, beispielsweise mit Bor.

SOI Wafer sind für die Herstellung solcher Mikrospiegelvorrichtungen besonders geeignet, weil sie bereits über eine Isolationsschicht verfügen, welche - wie weiter unten noch beschrieben - für die Herstellung der Spiegel eine wichtige Rolle spielt.

Die Aktuierung der Spiegel erfolgt wie bereits erwähnt durch elektrische Felder. Diese können an sich in beliebiger Art und Weise erzeugt werden. Es muss lediglich darauf geachtet werden, dass die Felder in ihrer Grösse derart ausgebildet sind, dass sie jeweils hauptsächlich auf einen bestimmten Teil eines Spiegels einwirken, sodass sich dieser unter der Wirkung eines solchen elektrischen Feldes um eine oder mehrere seiner Drehachsen schwenkt. Um gezielt einzelne Schwenkbewegungen oder auch eine Oszillation des Spiegels zu erreichen, müssen diese Felder gezielt ein- und wieder ausgeschaltet werden können.

Bei einer bevorzugten Ausführungsform der Erfindung wird die für die Aktuierung eines Spiegels benötigten elektrischen bzw. elektrostatischen Felder mittels einer Elektrodenanordnung erzeugt, welche aus der Deckschicht eines zweiten SOI Wafers herausstrukturiert ist, wobei eine solche Elektrodenanordnung eine Mehrzahl von Elektroden umfasst. Sie umfasst beispielsweise drei Elektroden, eine um den Spiegel um eine der beiden Drehachsen zu kippen und zwei weitere um den Spiegel jeweils in beiden Richtungen um die andere Drehachse zu kippen. Eine solche Vorrichtung mit einer (oder mehreren) aus einer Siliziumschicht herausstrukturierten Elektrodenanordnung wird daher nachfolgend auch als Elektrodenchip bezeichnet.

Hierfür sind die Spiegelanordnung und die Elektrodenanordnung derart aneinander angelegt, dass die von der Isolationsschicht des ersten SOI Wafers abgewandte Oberfläche der Deckschicht und die von der Isolationsschicht des zweiten SOI Wafers abgewandte Oberfläche der Deckschicht einander zugewandt sind. Sie werden so positioniert, dass die Elektroden und der Mikrospiegel einander gegenüberliegen und einen definierten Abstand zueinander aufweisen. Dadurch ist eine präzise, elektrostatische Aktuierung des Mikrospiegels möglich, indem eine elektrische Spannung an zumindest eine der Elektroden angelegt wird.

Bei einer solchen elektrostatischen Aktuierung des Mikrospiegels kann es vorkommen, dass auch externe elektrostatische Felder vorliegen. So können beispielsweise benachbarte Elektroden oder Leiterbahnen Störfelder (übersprechen) zur Folge haben, welche das Schaltverhalten des Spiegels in ungewollter und negativer Weise beeinflussen. Durch solche externen Felder kann der Spiegel in Ruhestellung nämlich bereits einen Offsetwinkel aufweisen, d. h. aus seiner ursprünglichen Ruhelage ausgelenkt sein. Dadurch kann der Spiegel nicht mehr präzise und gezielt um einen bestimmten Winkel um eine seiner Achsen geschwenkt werden (der Spiegel "driftet").

Liegen keine derartigen externen Störfelder vor, beispielsweise wenn es sich um einen einzelnen Mikrospiegel handelt, oder sind die Felder im Bereich des Spiegels genügend gering, können diese Felder ausser Acht gelassen werden. In diesem Fall müssen keine besonderen Massnahmen ergriffen werden.

Häufig sind jedoch solche Störfelder vorhanden, beispielsweise wenn mehrere solcher Mikrospiegel nebeneinander angeordnet sind. In solchen Fällen können beispielsweise die Elektroden und Leiterbahnen eines Nachbarspiegels solche Störfelder verursachen. Aber auch die "eigenen" Leiterbahnen können solche Störfelder zur Folge haben. Um die negativen Auswirkungen solcher Störfelder zu vermeiden, ist die Elektrodenanordnung in einer weiteren bevorzugten Ausführungsform der Erfindung zumindest teilweise von einer aus der Deckschicht des zweiten SOI Wafers herausstrukturierten, mit Masse verbundenen Abschirmung umgeben. Vorzugsweise ist die Elektrodenanordnung im Wesentlichen vollständig von der Abschirmung umgeben. Durch diese Abschirmung sind die Elektroden von externen elektrischen Feldern abgeschirmt. Der Spiegel "driftet" nicht mehr und kann folglich präzise und gezielt angesteuert werden.

Bei einer solchen Mikrospiegelvorrichtung mit einer Spiegelanordnung und einer zugehörigen Elektrodenanordnung zur Aktuierung des Spiegels ist es äusserst wichtig, dass die Elektroden und der Spiegel präzise zueinander positioniert sind. Sind die Elektroden beispielsweise verschoben, kann der Spiegel unter Umständen nicht mehr korrekt aktuiert werden, weil das von den Elektroden erzeugte elektrostatische Feld nicht mehr wie gewünscht auf einen bestimmten Teilbereich des Spiegels, sondern auf mehrere Teile, einen anderen oder gar keinen Teil des Spiegels mehr wirkt.

Weiter ist es auch wichtig, dass die Elektroden und der Spiegel einen definierten Abstand zueinander aufweisen. Durch Variationen in den einzelnen Prozessschritten kann es vorkommen, dass insbesondere von Wafer zu Wafer, aber auch innerhalb eines Wafers die Abstände der Spiegel zu den zugehörigen Elektroden nicht überall gleich gross sind. Ist der Abstand kleiner oder grösser als der definierte Abstand, ändert sich die auf den Spiegel wirkende elektrostatische Kraft und damit auch das Schaltverhalten des betreffenden Spiegels. So kann es sein, dass der Drehwinkel des Spiegels zu gross oder zu klein wird und der zu reflektierende Lichtstrahl das gewünschte Ziel verfehlt.

Zur gegenseitigen Ausrichtung des Chips mit der Spiegelanordnung und des Chips mit der zugehörigen Elektrodenanordnung können die hierfür bekannten Verfahren verwendet werden. Hierzu gehört beispielsweise das sogenannte Flip Chip Bonding, mittels welchem die beiden Chips einerseits miteinander verbunden und andererseits auch gegenseitig ausgerichtet werden können. Zur gegenseitigen Ausrichtung der beiden Chips kann aber auf einem der Chips auch eine Ausnehmung, beispielsweise ein Loch oder eine Nut, und auf dem anderen Chip ein entsprechender Vorsprung wie etwa ein Zapfen oder eine Feder vorgesehen sein. Ausnehmung und Vorsprung sind nun derart ausgebildet, dass sie ineinandergreifen und die beiden Chips entsprechend positioniert werden. Allerdings ist hierbei oft schwierig, dass die beiden Chips nach dem Zusammenfügen einen definierten Abstand zueinander einhalten.

Bei einer bevorzugten Ausführungsform der Erfindung umfasst die Mikrospiegelvorrichtung daher eine kombinierte Abstands- und Ausrichtvorrichtung. Diese umfasst auf der von der Isolationsschicht des ersten SOI Wafers abgewandten Oberfläche der Deckschicht mit der Spiegelanordnung eine erste Ausnehmung und auf der von der Isolationsschicht des zweiten SOI Wafers abgewandten Oberfläche der Deckschicht mit der Elektrodenanordnung eine zweite Ausnehmung. Die beiden Ausnehmungen sind derart dimensioniert und positioniert, dass sie, wenn die beiden Deckschichten mit den entsprechenden Oberflächen aneinandergelegt werden, sich gegenüber liegen und zwischen bzw. in den beiden Deckschichten der beiden SOI Wafer einen Freiraum bilden. Die Abstands- und Ausrichtvorrichtung umfasst weiter einen Abstandshalter. Dieser wird nun derart zwischen den beiden Deckschichten eingefügt, dass er sich in diesem Freiraum befindet.

Als Abstandshalter wird bevorzugt eine Faser, beispielsweise eine Glasfaser, mit einem präzise definierten, kreisscheibenförmigen Querschnitt verwendet und die Ausnehmungen sind bevorzugt als Nuten einer bestimmten Breite und Tiefe ausgebildet. Die Breite der Nuten entspricht in etwa dem Durchmesser und die Tiefe der Nuten etwa dem Radius der Faser. Auf diese Weise können nicht nur die beiden Chips präzise gegenseitig ausgerichtet werden, über den Durchmesser der Faser kann auch der Abstand zwischen den beiden Chips äusserst genau eingestellt werden. Dieser Abstand hängt nämlich ausschliesslich vom Durchmesser der Faser ab, d. h. Prozessvariationen bei der Herstellung der Chips haben keinen Einfluss auf den Abstand zwischen den Elektroden und dem Spiegel.

Vor dem Zusammenfügen der beiden Chips wird der Abstandshalter in eine der beiden Ausnehmungen eingefügt. Damit er nun beim Zusammenfügen nicht wieder herausfällt, umfasst wenigstens eine der beiden Ausnehmungen eine entsprechende Haltevorrichtung für den Abstandshalter. Diese Haltevorrichtung umfasst beispielsweise wenigstens eine in dieser Ausnehmung ausgeformte Blattfeder, durch welche der Abstandshalter in der Ausnehmung gehalten wird.

Es wäre zwar möglich, die Ausnehmungen nicht mit einer derartigen Haltevorrichtung auszustatten, aber in diesem Fall ist das Zusammenfügen der beiden Chips schwieriger und mit mehr Aufwand verbunden.

Zwar gibt es auch Anwendungen, wo jeweils nur ein einzelner Mikrospiegel wie vorgängig beschrieben benötigt wird. Allerdings wird häufig eine Vielzahl von Mikrospiegelvorrichtungen wie vorgängig beschrieben benötigt. Diese Mikrospiegelvorrichtungen werden dann bevorzugt in einem Array angeordnet.

Bei einem solchen Array von Mikrospiegelvorrichtungen werden die einzelnen Mikrospiegelvorrichtungen typischerweise nicht aus jeweils unterschiedlichen SOI Wafern, sondern sämtliche Spiegelanordnungen sind aus der Deckschicht eines einzigen, ersten SOI Wafers herausstrukturiert. Umfassen die Mikrospiegelvorrichtungen zusätzlich noch eine Elektrodenanordnung wie vorgängig beschrieben, werden die einzelnen Elektrodenanordnungen typischerweise ebenfalls nicht aus jeweils unterschiedlichen SOI Wafern, sondern sämtliche Elektrodenanordnungen sind aus der Deckschicht eines einzigen, zweiten SOI Wafers herausstrukturiert.

Auch in diesem Fall sind die Spiegelanordnungen und die Elektrodenanordnungen wie vorgängig beschrieben derart aneinander angelegt, dass die von der Isolationsschicht des ersten SOI Wafers abgewandte Oberfläche der Deckschicht und die von der Isolationsschicht des zweiten SOI Wafers abgewandte Oberfläche der Deckschicht einander zugewandt sind und dass jeweils eine Elektrodenanordnung und eine Spiegelanordnung einander gegenüber liegen und einen definierten Abstand zueinander aufweisen.

Ein solches Array von Mikrospiegelvorrichtungen kann im Prinzip eine beliebige Anzahl Reihen und Spalten von Mikrospiegelvorrichtungen umfassen. Vorzugsweise umfasst das Array jedoch zwei bis vier Reihen von Mikrospiegelvorrichtungen mit parallelen ersten und zusammenfallenden zweiten Drehachsen und wenigstens zwei Spalten von Mikrospiegelvorrichtungen mit zusammenfallenden ersten und parallelen zweiten Drehachsen. Die Anzahl der Spalten liegt typischerweise im Bereich von einigen wenigen bis zu einigen Dutzend Spalten.

Bei höherer Anzahl von Reihen und Spalten sind die Auswirkungen von mechanischen Spannungen auf die grossflächige, dünne Membrane (Basis) erheblich. Die Basis weist aufgrund kompressiver Spannungen Wölbungen auf, welche durch minimale Kräfte sprungartig andere stabile Wölbungszustände einnehmen können. D. h. diese Membrane ist bi- oder meist sogar multistabil. Hierdurch werden ursprüngliche Richtungen verschiedener Mikrospiegeloberflächen im Array undefiniert verändert. Die Krümmung der Mirkospiegeloberfläche selbst bleibt hierbei allerdings möglichst gering, d. h. der Krümmungsradius möglichst gross und die Spiegeloberfläche damit möglichst ebenmäßig, da der Spiegel über die Torsions- und Biegefedern von der Basis entkoppelt ist und folglich nur die Basisrahmenstruktur von dieser Wölbung betroffen ist. Zur Kompensation solcher mechanischen Spannungen in Richtung der ersten Drehachsen weist die Deckschicht des ersten SOI Wafers, d. h. die Deckschicht mit den Spiegelanordnungen, zwischen der zweiten und der dritten Reihe von Mikrospiegelvorrichtungen mit Vorteil eine Ausnehmung auf. D. h. die Deckschicht ist zwischen der zweiten und der dritten Reihe von Mikrospiegelvorrichtungen vorzugsweise vollständig durchgetrennt, sodass die ersten zwei Reihen und die letzten beiden Reihen quasi je auf einem separaten Abschnitt der Deckschicht liegen.

Um ein noch grösseres Spiegelarray zu erhalten, können selbstverständlich auch mehrere solcher Arrays nebeneinander gelegt und zusammengeschaltet werden.

Zur Kompensation von mechanischen Spannungen in Richtung der zweiten Drehachsen dienen, wie ebenfalls bereits beschrieben, die einzelnen Biegefedern jedes Spiegels.

Um solche Kräfte noch besser kompensieren zu können, ist die Deckschicht des ersten SOI Wafers mit Vorteil weiter unterteilt. Sie ist beispielsweise zwischen den Mikrospiegelvorrichtungen einer Reihe in separate Zungen unterteilt, sodass jeweils die beiden übereinander liegenden Spiegel der ersten und der zweiten bzw. der dritten und der vierten Reihe in einem separierten Bereich der Deckschicht liegen. D. h. der Abschnitt der Deckschicht mit den ersten beiden Reihen wie auch der Abschnitt der Deckschicht mit den letzten beiden Reihen ist durch diese Ausnehmungen in eine Mehrzahl von Zungen aufgeteilt, welche jeweils zwei benachbarte Spiegel je einer Reihe umfassen.

Bei dem Verfahren zur Herstellung einer Mikrospiegelvorrichtung, wie sie vorgängig beschrieben worden ist, wird eine Spiegelanordnung mit einer Basisstruktur, einem Mikrospiegel und einer zwischen der Basisstruktur und dem Mikrospiegel angeordneten Rahmenstruktur aus einer Halbleiterschicht, insbesondere einer Siliziumschicht, herausstrukturiert. Weiter werden aus der Halbleiterschicht zwei eine erste Drehachse des Mikrospiegels definierende, den Mikrospiegel mit der Rahmenstruktur verbindende Gelenkverbindungen und zwei eine zweite Drehachse definierende, die Rahmenstruktur mit der Basisstruktur verbindende Gelenkverbindungen aus der Halbleiterschicht herausstrukturiert, wobei die beiden Drehachsen einen Winkel grösser als 0 Grad einschliessen.

Erfindungsgemäss werden nun zwei der Gelenkverbindungen, welche eine der beiden Drehachsen definieren, als eine je eine Torsionsfeder umfassende Gelenkverbindung und die beiden anderen Gelenkverbindungen, welche die andere der beiden Drehachsen definieren, als eine je eine Biegefeder umfassende Gelenkverbindung aus der Halbleiterschicht herausstrukturiert.

Vorzugsweise werden die Gelenkverbindungen, welche die erste Drehachse definieren, als eine je eine Torsionsfeder umfassende Gelenkverbindung und die Gelenkverbindungen, welche die zweite Drehachse definieren, als eine je eine Biegefeder umfassende Gelenkverbindung aus der Halbleiterschicht herausstrukturiert.

Mit Vorteil wird hierbei wenigstens eine Oberfläche der Halbleiterschicht des Mikrospiegels mit einer Metallbeschichtung versehen. Vorzugsweise werden die Torsionsfedern und die Biegefedern jedoch frei von der Metallbeschichtung gehalten.

Wie bereits vorgängig beschrieben, wird die Spiegelanordnung aus der als Deckschicht bezeichneten Halbleiterschicht eines SOI Wafers herausstrukturiert. Ebenso wird die Elektrodenanordnung mit jeweils einer Mehrzahl von Elektroden aus der Deckschicht eines zweiten SOI Wafers herausstrukturiert. Hierbei werden die Spiegelanordnung und die Elektrodenanordnung derart aneinander angelegt, dass die Elektroden und der Mikrospiegel einander gegenüber liegen und einen definierten Abstand zueinander aufweisen.

Dies kann beispielsweise geschehen, indem die Spiegelanordnung und die Elektrodenanordnung derart aneinander angelegt werden, dass die von der Isolationsschicht des ersten SOI Wafers abgewandte Oberfläche der Deckschicht und die von der Isolationsschicht des zweiten SOI Wafers abgewandte Oberfläche der Deckschicht einander zugewandt sind, Es kann aber auch derart geschehen, indem die Spiegelanordnung und die Elektrodenanordnung derart aneinander angelegt werden, dass die von der Isolationsschicht des Spiegel-Wafers abgewandte Oberfläche der Substratschicht und die von der Isolationsschicht des Elektroden-Wafers abgewandte Oberfläche der Deckschicht einander zugewandt sind,

Um die Spiegelanordnung und die Elektrodenanordnung bei dem Beispiel, bei welchem die beiden Deckschichten einander zugewandt sind, korrekt zusammenzufügen, wird auf der von der Isolationsschicht des ersten SOI Wafers abgewandten Oberfläche der Deckschicht mit Vorteil eine erste Ausnehmung und auf der von der Isolationsschicht des zweiten SOI Wafers abgewandten Oberfläche der Deckschicht eine zweite Ausnehmung herausstrukturiert. Und beim Zusammenfügen wird ein Abstandshalter in einen durch die beiden Ausnehmungen gebildeten Freiraum zwischen bzw. in den beiden Deckschichten der beiden SOI Wafer eingefügt.

Bei dem anderen Beispiel, wo die Substratschicht des Spiegel-Wafers der Deckschicht des Elektroden-Wafers zugewandt ist, wird der Abstand zwischen Spiegel und Elektroden im Wesentlichen über die Schichtdicke der Substratschicht eingestellt und die Ausrichtung erfolgt über definierte Referenzflächen an einem der beiden Chips und entsprechende Referenz- bzw. Auflagepunkte am jeweils anderen Chip. Beim Zusammenfügen werden die Referenzflächen mit den entsprechenden Referenzpunkten in Kontakt gebracht, sodass nicht nur der Abstand der beiden Chips sondern auch deren horizontale Ausrichtung präzise definiert sind. Durch Federn, die beispielsweise gegenüber einer Referenzfläche aus den Waferschichten herausstrukturiert werden, werden die beiden Chips aneinander gepresst und so gegenseitig ausgerichtet und in Position gehalten.

Bei einem Verfahren zur Herstellung einer Mikrospiegelanordnung, wie sie vorgängig beschrieben worden ist, wird vorteilhaft eine Mehrzahl von Spiegelanordnungen aus der Deckschicht des ersten SOI Wafers und eine der Mehrzahl von Spiegelanordnungen entsprechende Anzahl von Elektrodenanordnungen aus der Deckschicht eines zweiten SOI Wafers herausstrukturiert. Anschliessend werden die Spiegelanordnungen und die Elektrodenanordnungen derart aneinander angelegt, dass jeweils eine Elektrodenanordnung und eine Spiegelanordnung einander gegenüber liegen und einen definierten Abstand zueinander aufweisen.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1    Einen schematisch dargestellten Mikrospiegel gemäss der Erfindung;

Fig. 2    einen schematisch dargestellten, weiteren erfindungsgemässen Mikrospielgel;

Fig. 3    eine Biegefeder des Spiegels aus Fig. 2 in einer vergrösserten Darstellung in einem unbelasteten Zustand;

Fig. 4    die Biegefeder aus Fig. 3 unter Belastung;

Fig. 5    eine schematisch dargestellte Elektrodenanordnung für den Mikrospiegel aus Fig. 2;

Fig. 6    einen schematisch dargestellten Querschnitt durch eine erfindungsge-mässe Mikrospiegelvorrichtung mit einem Mikrospiegel und einer zugehöri-gen Elektrodenanordnung;

Fig. 7    eine schematisch dargestellte Draufsicht auf die Positionier- und Abstandsvorrichtung aus Fig. 6;

Fig. 8    ein Array von Mikrospiegeln gemäss Fig. 2;

Fig. 9    ein Array von Elektrodenanordnungen gemäss Fig. 5;

Fig. 10    einen schematisch dargestellten Ausschnitt aus einem Querschnitt durch die Arrays aus den Fig. 8 und 9 einmal ohne und einmal mit einer aktivier-ten Elektrode;

Fig. 11    eine schematische Darstellung der Prozessschritte zur Herstellung einer erfindungsgemässen Mikrospiegelanordnung;

Fig. 12    eine schematische Darstellung der Prozessschritte zur Herstellung einer Elektrodenanordnung;

Fig. 13    eine schematische Darstellung der Prozessschritte beim Zusammenfügen eines Spiegelchips und eines Elektrodenchips;

Fig. 14    eine schematische Darstellung eines weiteren Ausführungsbeispiels einer Torsionsfeder für einen erfidnungsgemässen Mikrospiegel;

Fig. 15    einen schematisch dargestellten Querschnitt durch eine weitere Ausführungsform einer erfindungsgemässen Mikrospiegelvorrichtung mit einem Mikrospiegel und einer zugehörigen Elektrodenanordnung;

Fig. 16    eine schematisch dargestellte Draufsicht auf den Spiegelchip der Mikrospiegelvorrichtung aus Fig. 15 und

Fig. 17    eine schematisch dargestellte Draufsicht auf den Elektrodenchip der Mikrospiegelvorrichtung aus Fig. 15;

Grundsätzlich sind in den Figuren gleiche Teile mit gleichen Bezugszeichen versehen.

## Wege zur Ausführung der Erfindung

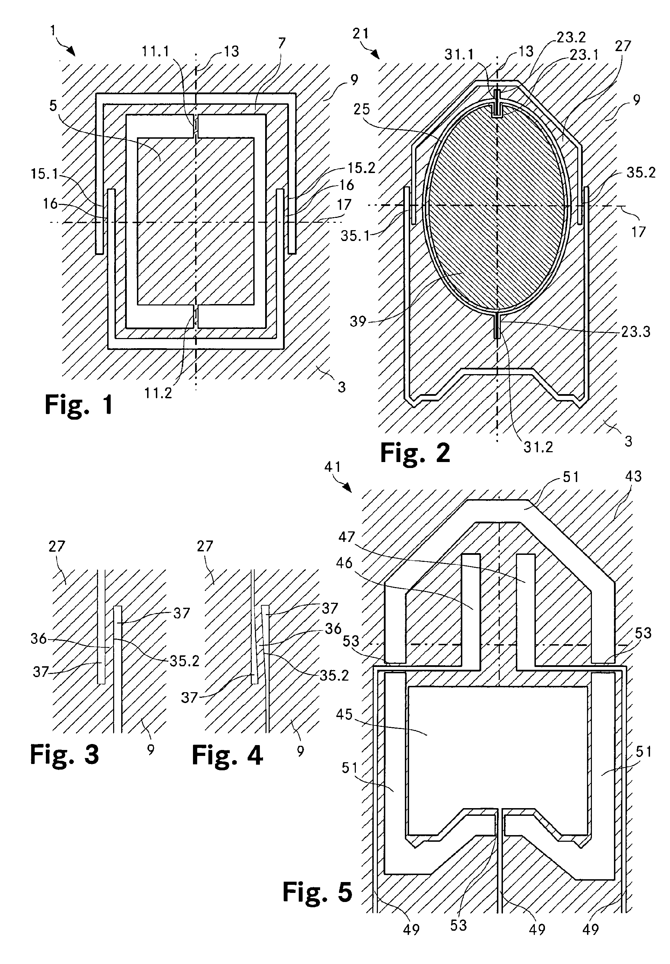

Fig. 1 zeigt eine schematische Darstellung einer erfindungsgemässen Mikrospiegelanordnung 1, die aus einem Substrat, in diesem Fall aus einer dünnen Siliziumschicht 3 wie z. B. der Deckschicht eines SOI Wafers, herausstrukturiert ist. Die Mikrospiegelanordnung 1 umfasst einen Spiegel 5, einen Rahmen 7 und eine Basis 9. Der Spiegel 5 ist über zwei Torsionsfedern 11.1, 11.2, welche eine erste Drehachse 13 definieren, mit dem Rahmen 7 verbunden. Der Rahmen 7 wiederum ist über zwei Biegefedern 15.1, 15.2, welche eine zweite Drehachse 17 definieren, mit der Basis 9 verbunden.

Der Rahmen 7 bildet zusammen mit den Torsionsfedern 11.1, 11.2 und den Biegefedern 15.1, 15.2 quasi eine kardanische Aufhängung des Spiegels 5 in der Basis 9. Der Rahmen 7 ist entsprechend ringförmig um den Spiegel 5 herumlaufend ausgebildet, sodass er den Spiegel 5 vollständig umgibt.

Der Spiegel 5 ist in diesem Beispiel rechteckig ausgebildet. Die Torsionsfedern 11.1, 11.2 sind an zwei gegenüberliegenden Seiten des Spiegels 5 und die Biegefedern 15.1, 15.2 sind an den beiden anderen gegenüberliegenden Seiten des Spiegels 5 angebracht. Dementsprechend ist hier auch der Rahmen 7 im Wesentlichen rechteckig ausgebildet. Die Form des Spiegels 5 und des Rahmens 7 ist im Prinzip jedoch unerheblich und allenfalls durch die geplante Anwendung vorgegeben. Spiegel und Rahmen können im Prinzip jede denkbare Form annehmen, solange der Spiegel im Rahmen und der Rahmen in der Basis um die durch die Federn definierten Achsen gedreht werden können. Neben der gezeigten rechteckigen Form bieten sich beispielsweise eine im Wesentlichen runde oder ovale bzw. elliptische Form des Spiegels und entsprechend auch des Rahmens an.

Die Torsionsfedern 11.1, 11.2 sind als dünne Torsionsbalken ausgebildet, welche parallel zur Drehachse 13 angeordnet und an einem Ende mit dem Spiegel 5 und am jeweils anderen Ende mit dem Rahmen 7 verbunden sind. Die Biegefedern 15.1, 15.2 umfassen ebenfalls je einen dünnen Biegebalken 16, welcher rechtwinklig zur Drehachse 17 angeordnet ist und an einem Ende mit dem Rahmen und am jeweils anderen Ende mit der Basis 9 verbunden sind. Die Biegebalken 16 gehen hierbei jeweils direkt in den Rahmen 7 bzw. die Basis 9 über, sodass die Verbindungen zwischen den Biegebalken 16 und dem Rahmen 7 bzw. der Basis 9 keine Abschnitte enthält, welche parallel zur Drehachse 17 angeordnet sind. Solche Verbindungsstücke könnten nämlich zu einer Torsionsdrehung des Spiegels 5 um eine durch diese Verbindungsstücke definierte Drehachse führen, was jedoch verhindert werden soll, damit die Drehbewegungen des Spiegels ausschliesslich um die Drehachse 17 erfolgen. Es ist zu beachten, dass die gesamte in Fig. 1 schraffiert dargestellte Fläche einstückig aus der Deckschicht, beispielsweise einer dünnen Siliziumschicht 3, herausstrukturiert ist, indem die weissen Bereiche aus der Siliziumschicht 3 entfernt worden sind.

Fig. 2 zeigt ein weiteres Beispiel einer erfindungsgemässen Spiegelanordnung 21. In diesem Beispiel ist der Spiegel 25 oval ausgebildet und ist wiederum von einem Rahmen 27 vollständig umgeben. Auch hier ist der Spiegel 25 über zwei Torsionsfedern 31.1, 31.2 mit dem Rahmen 27 und der Rahmen 27 über zwei Biegefedern 35.1, 35.2 mit der Basis 9 verbunden. Im Unterschied zu Fig. 1 ist die (gemäss Darstellung in Fig. 2) obere Torsionsfeder 31.1 nicht am äusseren Rand des Spiegels 25, sondern am unteren Rand einer rechteckigen Ausnehmung 23.1 am oberen Rand des Spiegels 25 befestigt. Ebenso ist das andere Ende der Torsionsfeder 31.1 nicht am inneren Rand des Rahmens 27, sondern am oberen Rand einer rechteckigen Ausnehmung 23.2 am oberen Rand des Rahmens 27 befestigt. Die untere Torsionsfeder 31.2 wiederum ist zwar am äusseren Rand des Spiegels 25, aber ebenfalls am unteren Rand einer rechteckigen Ausnehmung 23.3 am unteren Rand des Rahmens 27 befestigt.

Durch diese Ausnehmungen 23.1, 23.2, 23.3 kann der Zwischenraum zwischen Spiegel 25 und Rahmen 27 erheblich verkleinert werden. Damit kann entweder der Platzbedarf für die gesamte Spiegelanordnung 21 verringert werden oder es kann z. B. auch bei gleichbleibendem Platzbedarf für die gesamte Spiegelanordnung 21 die Spiegelfläche erhöht werden. Solche Aussparungen können selbstverständlich auch weggelassen oder aber auch bei weiteren Befestigungspunkten der Torsionsfedern 31.1, 31.2 vorgesehen sein.

Die Biegefedern 35.1, 35.2 sind wiederum direkt mit dem Rahmen 27 bzw. der Basis 3 verbunden, sodass eine Torsionsbewegung des Spiegels 25 um eine von der Drehachse 17 verschiedene Achse ausgeschlossen werden kann.

In Fig. 2 ist weiter dargestellt, dass der Spiegel 25 mit einer Metallisierung 39 versehen ist. Diese Metallisierung 39 umfasst in diesem Beispiel eine dünne Goldschicht und bedeckt praktisch die gesamte Fläche des Spiegels 25. Allerdings ist die Metallisierung 39 im Bereich der Ausnehmung 23.1 nicht auf die Siliziumschicht 3 aufgebracht worden, sodass die Torsionsfedern 31.1, 31.2 wie auch die Biegefedern 35.1, 35.2 nicht von der Metallisierung 39 bedeckt sind. Wären die Torsionsfedern 31.1, 31.2 oder die Biegefedern 35.1, 35.2 ebenfalls metallisiert, könnte dies zu einem verfälschten Schaltverhalten des Spiegels führen. Beim Schwenken des Spiegels um die Drehachsen 13, 17 würde sich nämlich die Metallisierung plastisch verformen, wobei diese Verformung nicht mehr vollständig reversibel ist, sodass der Spiegel in seiner Ruheposition nicht mehr vollständig parallel zur Siliziumschicht 3 ausgerichtet ist. Diese Effekte können durch das Weglassen der Metallisierung auf den Federn vermindert bzw. vollständig verhindert werden. Um Verformungen der Spiegeloberfläche zu vermeiden, ist der Spiegel 25 zudem auch auf seiner Rückseite (hier nicht sichtbar) metallisiert, wobei die Torsionsfedern 31.1, 31.2 und die Biegefedern 35.1, 35.2 auch auf ihrer Rückseite nicht metallisiert sind.

Die Figuren 3 und 4 zeigen eine vergrösserte Darstellung der Biegefeder 35.2 des Spiegels 25. Fig. 3 zeigt die Biegefeder 35.2 im unbelasteten Zustand, d. h. wenn keine Kräfte in Richtung der Drehachse 17 auf die Spiegelanordnung 21 wirken. Die Zwischenräume 37 zwischen dem Rahmen 27 und dem Biegebalken 36 bzw.

zwischen dem Biegebalken 36 und der Basis 9 sind in diesem Fall im Wesentlichen überall gleich breit.

Wenn jedoch Kräfte in Richtung der Drehachse 17 auf die Spiegelanordnung 21 wirken, werden diese Kräfte durch die Biegefedern 35.1, 35.2 aufgenommen, wie dies in Fig. 4 dargestellt ist. D. h. solche Kräfte haben keinen oder lediglich einen vernachlässigbaren Einfluss auf das Schaltverhalten des Spiegels 25, denn durch die wirkenden Kräfte werden die Zwischenräume 37 an ihren jeweils offenen Enden zusammengedrückt und sind dadurch nicht mehr überall gleich breit, sondern dreieck- bzw. trapezförmig. Das obere Ende des Biegebalkens 36 wird durch die wirkende Kraft leicht nach links und sein unteres Ende leicht nach rechts versetzt, sodass der Biegebalken 36 insgesamt leicht schräg steht.

In Fig. 5 ist eine Elektrodenanordnung 41 dargestellt, wie sie beispielsweise zusammen mit der Spiegelanordnung 21 aus Fig. 2 verwendet werden kann, um den Spiegel 25 zu aktuieren, d. h. um eine oder beide Drehachsen 13, 17 zu drehen bzw. zu verschwenken.

Auch hier stellt die schraffierte Fläche eine dünne Siliziumschicht 43 dar. Die weissen Flächen entsprechen hier allerdings nicht Substratbereichen, die entfernt worden sind, sondern Strukturen, die aus der Siliziumschicht 43 herausstrukturiert worden sind, indem die Siliziumschicht 43 um diese Strukturen herum zumindest teilweise entfernt worden ist.

Diese Strukturen umfassen eine Mehrzahl von Elektroden 45, 46, 47 sowie dazugehörige Leiterbahnen 49, die jeweils ausgehend von einer Elektrode 45, 46, 47 zu einem (nicht dargestellten) Kontaktpunkt führen. Die Elektroden 45, 46, 47 sind zudem von einer Abschirmung 51 umgeben, welche Durchlässe 53 für die Leiterbahnen 49 aufweist. Diese Abschirmung 51 dient einerseits zur Abschirmung von externen elektrischen bzw. elektrostatischen Feldern, wie sie beispielsweise von den Leiterbahnen 49 oder auch von benachbarten Elektrodenanordnungen erzeugt werden.

In dem dargestellten Beispiel werden die Spiegelanordnung 21 und die Elektrodenanordnung 41 derart übereinander angeordnet, dass die in den Figuren 2 respektive 5 dargestellten Oberflächen einander zugewandt sind. D. h. die Spiegelanordnung 21, wie sie in Fig. 2 dargestellt wird, wird z. B. um eine zur Drehachse 13 parallele Achse um 180 Grad umgedreht, sodass die in Fig. 2 sichtbare Fläche nach Unten zeigt. Danach wird die Spiegelanordnung 21 auf die Elektrodenanordnung 41 gelegt und dort befestigt. Auf diese Weise befindet sich die Elektrode 45 im Bereich der unteren Hälfte des Spiegels 25 (gemäss Darstellung in Fig. 2), und die Elektroden 46 und 47 im rechten Bereich bzw. im linken Bereich der oberen Spiegelhälfte. Wird nun via die Leiterbahnen 49 an eine der drei Elektroden 45, 46, 47 eine elektrische Spannung angelegt, wird von dieser Elektrode 45, 46, 47 ein elektrostatisches Feld erzeugt, welches auf den entsprechenden Bereich des Spiegels 25 derart einwirkt, dass dieser Bereich von der unter Spannung stehenden Elektrode angezogen und der Spiegel 25 folglich um eine seiner Drehachsen 13 bzw. 17 geschwenkt wird. Der Drehwinkel hängt hierbei u. a. von der Höhe der angelegten Spannung sowie den physikalischen Abmessungen des Spiegels und der Torsions- bzw. Biegefedern ab. Es kann auch an mehrere Elektroden 45, 46, 47 gleichzeitig eine Spannung angelegt werden, etwa an die Elektrode 45 und eine der beiden anderen Elektroden 46, 47, um den Spiegel 25 um beide Achsen zu schwenken.

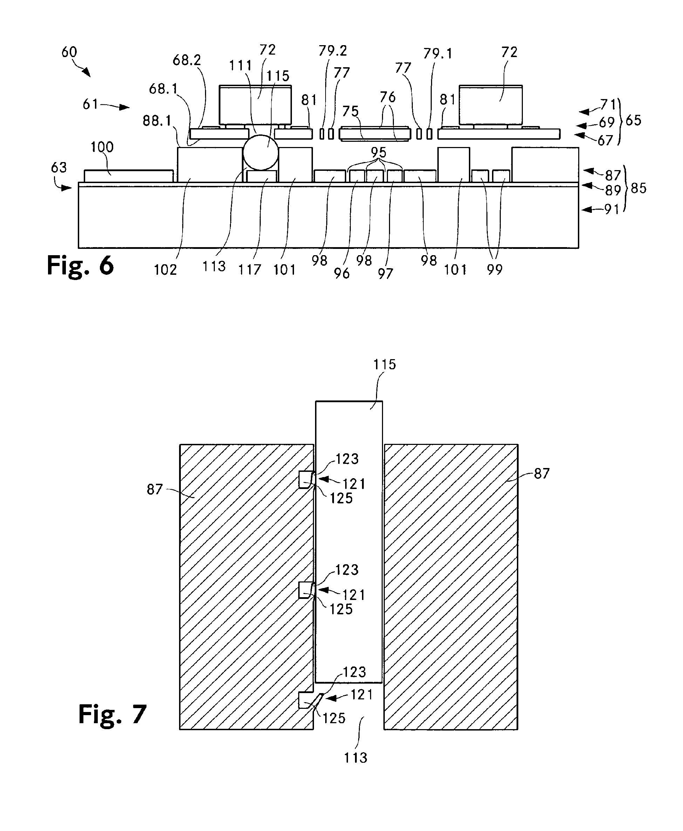

Fig. 6 zeigt einen schematisch dargestellten Querschnitt durch eine erfindungsgemässe Mikrospiegelvorrichtung 60 mit einem Spiegelchip 61 (nachfolgend auch als MEMS Chip bezeichnet) und einem Elektrodenchip 63.

Der hier dargestellte Spiegelchip 61 ist aus einem SOI Wafer 65 hergestellt. Dieser umfasst eine Deckschicht 67 (device layer) aus dotiertem Silizium, eine Isolationsschicht 69 (buried oxide layer oder auch BOX layer) aus Siliziumoxid und eine Substratschicht 71 (handle layer), ebenfalls aus dotiertem Silizium. Es ist gut zu erkennen, dass der Spiegel 75 mit dem Rahmen 77, den Biegefedern 79.1, 79.2 und der Basis 81 aus der Deckschicht 67 herausstrukturiert sind. Zusammengehalten wird das Ganze von den Stützstrukturen 72 der Substratschicht 71. Die Dicke des Spiegels 75, des Rahmens 77, der Biegefedern 79.1, 79.2 und der Basis 81 beträgt in diesem Beispiel etwa 10 bis 15 Mikrometer, die Dicke der Isolationsschicht etwa 1 bis 5 Mikrometer und die Dicke der stehengelassenen Substratschicht etwa 400 Mikrometer. Das Silizium ist beispielsweise mit Bor dotiert.

Der Spiegel 75 ist auf seiner Vorder- und seiner Rückseite mit einer Goldschicht 76 versehen. Auch andere Bereiche der Rückseite des Spiegelchips 61 sind metallisiert.

Der Elektrodenchip 63 ist ebenfalls aus einem SOI Wafer 85 hergestellt, welcher wiederum eine Deckschicht 87 (device layer) aus dotiertem Silizium, eine Isolationsschicht 89 (buried oxide layer oder auch BOX layer) aus Siliziumoxid und eine Substratschicht 91 (handle layer), ebenfalls aus dotiertem Silizium umfasst. Das Silizium ist beispielsweise wiederum mit Bor dotiert. Die Elektroden 96, 97, die Abschirmung 101 sowie die Leiterbahnen 99 und die bonding pads 100 sind wiederum aus der Deckschicht 87 herausstrukturiert worden. Zwischen den Abschirmungen 101 und den Elektroden 96, 97 sowie zwischen den Elektroden 96 und 97 sind zudem Masseflächen 98 vorgesehen, welche im Betrieb mit Masse verbunden werden.

Bei solchen Strukturen können sich in den Zwischenräumen 95 zwischen den Elektroden 96, 97, der Abschirmung 101 und den Masseflächen 98, insbesondere während des Betriebs der Vorrichtung, parasitäre Ladungen auf der Isolationsschicht 89 ansammeln. Dies kann dazu führen, dass diese parasitären Ladungen Störfelder verursachen, welche ihrerseits wiederum einen Einfluss auf den Spiegel 75 ausüben und dadurch dessen Schaltverhalten verändern können. Dieses Problem kann beispielsweise dadurch gelöst werden, dass die Höhe der Elektroden 96, 97, der Abschirmung 101 und der Masseflächen 98 im Vergleich zur Breite der jeweiligen Zwischenräume 95 einfach genügend gross gewählt wird, sodass die von den parasitären Ladungen verursachten Störfelder gar nicht bis zu deren Oberseite gelangen, sondern sozusagen in den Zwischenräumen 95 eingesperrt werden. Die Höhe der Elektroden 96, 97 und der Masseflächen 98 beträgt beispielsweise etwa 30 bis 40 Mikrometer und die Höhe der Abschirmung 101 etwa 150 Mikrometer, während die Breite der Zwischenräume 95 im Bereich von 5 bis 20 Mikrometern liegt. Die Dicke der Isolationsschicht beträgt etwa 1 bis 3 Mikrometer und die Dicke der Substratschicht liegt bei rund 400-500 Mikrometern. Um diese Einsperr-Wirkung zu erhalten, müssen diese Zwischenräume 95 wenigstens so hoch sein wie sie breit sind.

Eine weitere Möglichkeit Störfelder zu vermeiden besteht darin, die Isolationsschicht in den Zwischenräumen 95 zu entfernen. Hierbei werden jedoch auch die Elektroden und die Leiterbahnen unterätzt, d. h. die Isolationsschicht unter den Elektroden und den Leiterbahnen wird zumindest teilweise weggeätzt. Auf diese Weise können parasitäre Ladungen über das mit Masse verbundene, leitfähige Siliziumsubstrat abfliessen und sammeln sich deshalb gar nicht an. Während das Unterätzen bei den vergleichsweise breiten Elektroden kein Problem darstellt, kann es bei den Leiterbahnen jedoch passieren, dass die Isolationsschicht darunter vollständig entfernt wird, weshalb die Leiterbahnen dann quasi in der Luft hängen. Dies erhöht die Gefahr von Kurzschlüssen. Die Isolationsschicht sollte daher nur soweit angeätzt werden, dass auch die schmalen Leiterbahnen noch durch die Isolationsschicht mit dem Substrat verbunden bleiben. Die Leiterbahnen können dann auch metallisiert werden (z. B. mittels aufdampfen) ohne Kurzschlüsse zu verursachen. Da die Leiterbahnen nur leicht unterätzt sind, wird durch den Schatten der überhängenden Leiterbahn, die Metallschicht auf der Isolationsschicht (resp. dem Substrat) und der Leiterbahn unterbrochen.

Die Anordnung von Fig. 6 zeigt zudem sehr schön, dass die beiden SOI Wafer mit ihren Vorderseiten, d. h. Deckflächen 67, 87, zusammengefügt werden. D. h. als Spiegelfläche dient nicht die Vorderseite 68.1 der Deckschicht 67, sondern deren Rückseite 68.2. Wird zur Herstellung der Spiegelanordnung ein SOI Wafer 65 verwendet, bei dem die Deckschicht auf die Isolationsschicht gebondet worden ist, ist die Rückseite 68.2 der Deckschicht 67 zudem von optisch besserer Qualität als die Vorderseite 68.1 der Deckschicht 67, was für die Verwendung als Spiegeloberfläche von Vorteil ist.

In Fig. 6 ist weiter eine Ausricht- und Abstandsvorrichtung dargestellt. Diese umfasst eine Ausnehmung, nachfolgend als Nut 111 bezeichnet, in der Deckschicht 67 des Spiegelchips 61, eine U-förmige Nut 113 auf der Vorderseite 88.1 des Elektrodenchips 63 sowie eine Faser 115, welche einen kreisscheibenförmigen Querschnitt aufweist und zwischen die beiden Nuten 111, 113 eingefügt ist. In der Nut 113 befindet sich ein kleines Podest 117, auf welchem die Faser 115 aufliegt. Die Höhe des Podests 117 ist gleich der Höhe der Elektroden 96, 97 und der Masseflächen 98, da sie mit denselben Prozessschritten gefertigt werden. D. h. die Höhe der Podeste 117, der Elektroden 96, 97 und der Masseflächen 98 ist - unabhängig von den verwendeten Prozessen - immer gleich hoch. Damit hängt der Abstand zwischen den Elektroden 96, 97 und dem Spiegel 75 praktisch ausschliesslich vom Durchmesser der Fasern 115 ab, welcher genauestens definiert ist, da solche Fasern mit verschiedenen, standardisierten und entsprechend präzisen Durchmessern käuflich erworben werden können. Bei diesen Fasern handelt es sich beispielsweise um Lichtleiter, welche aus einem optisch transparenten Material bestehen. D. h. durch eine geeignete Wahl der Fasern 115 kann der Abstand von den Elektroden 96, 97 zum Spiegel 75 unabhängig vom verwendeten Prozess äusserst präzise und vor allem für jede Spiegel/Elektroden-Kombination exakt gleich eingestellt werden.

Mit dieser Ausricht- und Abstandsvorrichtung können der Spiegelchip 61 und der Elektrodenchip 63 also nicht nur präzise gegenseitig ausgerichtet werden, auch der genaue Abstand zwischen dem Spiegel 75 und den zugehörigen Elektroden 96, 97 kann sehr genau eingestellt werden, sodass das Schaltverhalten des Spiegels sehr genau und reproduzierbar wird. Vorzugsweise sind mindestens zwei solcher Ausricht- und Abstandsvorrichtungen vorgesehen, wobei die beiden Nuten 111 bzw. 113 in diesem Fall einen Winkel zueinander einschliessen, der grösser als 0 Grad ist, bevorzugt etwa 90 Grad. Anstelle der zylinderförmigen Fasern 115 können als Abstandshalter auch andere Gegenstände wie beispielsweise Kugeln verwendet werden. Diese sind in der Handhabung bei der Montage der beiden Wafer allerdings weniger praktisch wie Fasern.

Das Verbinden der beiden Chips selber erfolgt mit bekannten Methoden wie beispielsweise dem sogenannten Flip-Chip-Bonding, mittels UV-härtbarem Kleber oder durch Löten.

Fig. 7 zeigt eine schematisch dargestellte, vergrösserte Draufsicht auf die Positionier- und Abstandsvorrichtung aus Fig. 6. Damit die Faser 115 beim Zusammenfügen des Spiegel-61 und des Elektrodenchips 63 nicht herunterfällt, umfasst eine der Nuten, hier beispielsweise die Nut 113 in der Deckschicht 87 eine Haltevorrichtung für die Faser 115. Diese Haltevorrichtung ist in Fig. 7 in einer Draufsicht dargestellt. Sie umfasst mehrere, aus der Deckschicht 87 herausstrukturierte Blattfedern 121 mit jeweils einer Aussparung 125 und einer Lasche 123, welche im entspannten Zustand in die Nut hineinragt. Wird die Faser 115 in die Nut 113 eingefügt, wird die Lasche 123 jeder Blattfeder 121 in die entsprechende Aussparung 125 gedrückt und die Federkraft der Laschen 123 hält die Faser 115 in der Nut 113 fest.

Wenn sich die Blattfedern 121 wie dargestellt in der Deckschicht 87 des Elektrodenwafers befinden, wird beim Zusammenfügen von Spiegel- 61 und Elektrodenchip 63 zunächst die Faser 115 in die Nut 113 eingefügt und danach werden die beiden Deckschichten derart aufeinandergelegt, dass die Faser 115 in der anderen Nut 111 zu liegen kommt.

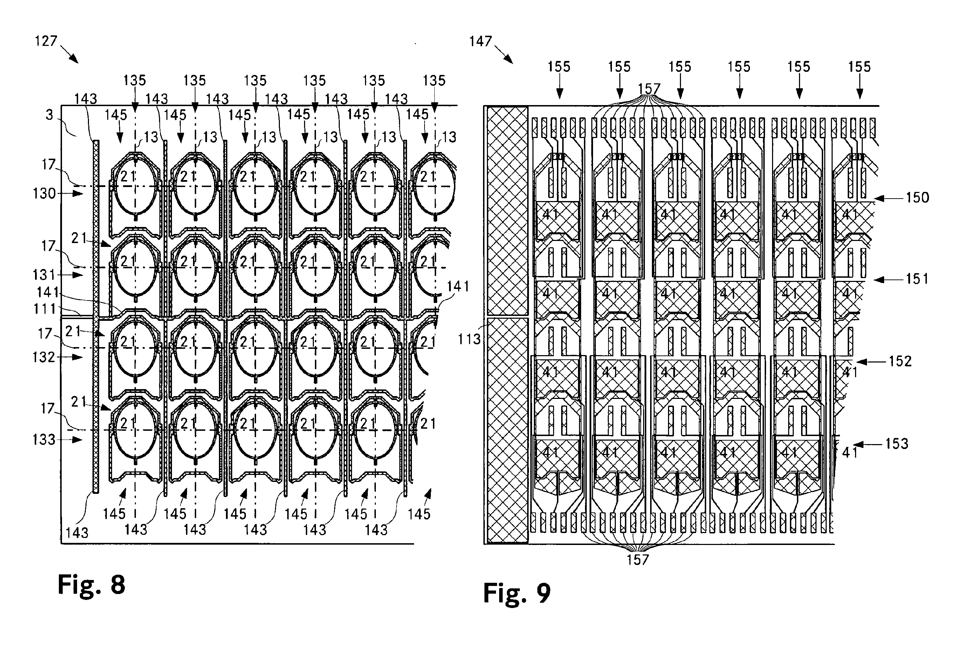

Fig. 8 zeigt einen Spiegelchip 127 mit einer Mehrzahl von Mikrospiegelanordnungen 21 gemäss Fig. 2, welche aus einem gemeinsamen Wafer, d. h. aus einer gemeinsamen Siliziumschicht 3 herausstrukturiert sind. Die Mikrospiegelanordnungen 21 sind in einem Array angeordnet, welches in diesem Beispiel vier Reihen 130, 131, 132, 133 und eine Vielzahl von Spalten 135 umfasst, wobei nur die ersten paar Spalten 135 sichtbar sind. Das Array umfasst beispielsweise 32 Spalten 135.

Die Mikrospiegelanordnungen 21 einer Reihe 130, 131, 132, 133 sind derart angeordnet, dass jeweils ihre ersten Drehachsen 13 parallel zueinander sind und ihre zweiten Drehachsen 17 zusammenfallen. Entsprechend sind die Mikrospiegelanordnungen 21 jeder Spalte 135 derart angeordnet, dass jeweils ihre zweiten Drehachsen 17 parallel zueinander sind und ihre ersten Drehachsen 13 zusammenfallen.

In Fig. 8 sind jene Flächen der Siliziumschicht 3 schraffiert dargestellt, welche aus der Siliziumschicht 3, d. h. der Deckschicht des entsprechenden Wafers, entfernt worden sind. Um den Einfluss von durch mechanischen Stress hervorgerufenen Wölbungen und deren Änderung durch Krafteinwirkung auf einzelne Mikrospiegelvorrichtungen zu vermindern oder zu eliminieren, sind in der Siliziumschicht 3 verschiedene Ausnehmungen vorgesehen. Eine dieser Ausnehmungen 141 verläuft zwischen der zweiten Reihe 131 und der dritten Reihe 132 und teilt die Siliziumschicht 3 quasi in einen oberen und einen unteren Teil auf.

Weitere Ausnehmungen 143 verlaufen jeweils senkrecht zur Ausnehmung 141 auf beiden Seiten jeder Spalte 135. Dadurch liegen jeweils zwei Mikrospiegelanordnungen 21 auf einer Zunge 145, welche jeweils nur noch oben bzw. unten mit der Siliziumschicht 3 verbunden ist. Auf diese Weise können Wölbungsänderungen der Basis (Membrane) durch Krafteinwirkungen (Temperatur, Spiegel Aktuation) verhindert werden.

Fig. 9 zeigt einen zum Spiegelchip 127 aus Fig. 8 zugehörigen Elektrodenchip 147 mit einer Mehrzahl von Elektrodenanordnungen 41 gemäss Fig. 5, welche ebenfalls in einem Array angeordnet sind. Auch diese sind aus einem gemeinsamen Wafer, d. h. aus einer gemeinsamen Siliziumschicht 43 herausstrukturiert. Das Array umfasst wiederum vier Reihen 150, 151, 152, 153 und eine Vielzahl von Spalten 155, wobei nur die ersten paar Spalten 155 sichtbar sind. Das Array umfasst in diesem Beispiel ebenfalls 32 Spalten 155, sodass jeder Spiegelanordnung 21 jeweils genau eine Elektrodenanordnung gegenüberliegt, wenn der Spiegelchip 127 und der Elektrodenchip 147 mit einander zugewandten Spiegeln und Elektroden zusammengefügt werden.

Jede der Leiterbahnen jeder Elektrodenanordnung 41 ist auf einen Kontaktpunkt 157, ein sogenanntes "bonding pad" geführt. Hierbei sind alle Kontaktpunkte 157 für die Leiterbahnen der oberen beiden Reihen 150, 151 von Elektrodenanordnungen 41 auf eine oberhalb der Elektrodenanordnungen positionierte Reihe von Kontaktpunkten 157 und alle Kontaktpunkte 157 für die Leiterbahnen der unteren beiden Reihen 152, 153 von Elektrodenanordnungen 41 auf eine oberhalb der Elektrodenanordnungen positionierte Reihe von Kontaktpunkten 157 geführt. Durch diese Anordnung der Kontaktpunkte 157 in regelmässigen Reihen wird die Herstellung der elektrischen Kontakte zu einer (nicht dargestellten) Steuerung bzw. Spannungsquelle erleichtert.

Die Leiterbahnen, die jeweils zu den Elektroden einer Elektrodenanordnung 41 führen, sind, wie in Fig. 5 zu erkennen ist, jeweils durch entsprechende Durchlässe in den Abschirmungen jeder Elektrodenanordnung 41 hindurchgeführt. Diese Durchlässe sind jedoch nicht bei allen Elektrodenanordnungen 41 am selben Ort. Sie befinden sich jeweils an den dafür geeignetsten Stellen.

Weiter sind in den Figuren 8 und 9 die Nuten 111 bzw. 113 zu erkennen, wie sie im Zusammenhang mit den Figuren 6-7 näher erläutert worden sind. Diese dienen hier zur gegenseitigen Ausrichtung des Spiegel- und des Elektrodenchips sowie - mit Hilfe einer Faser- zum Einstellen des gegenseitigen Abstands der beiden Chips.

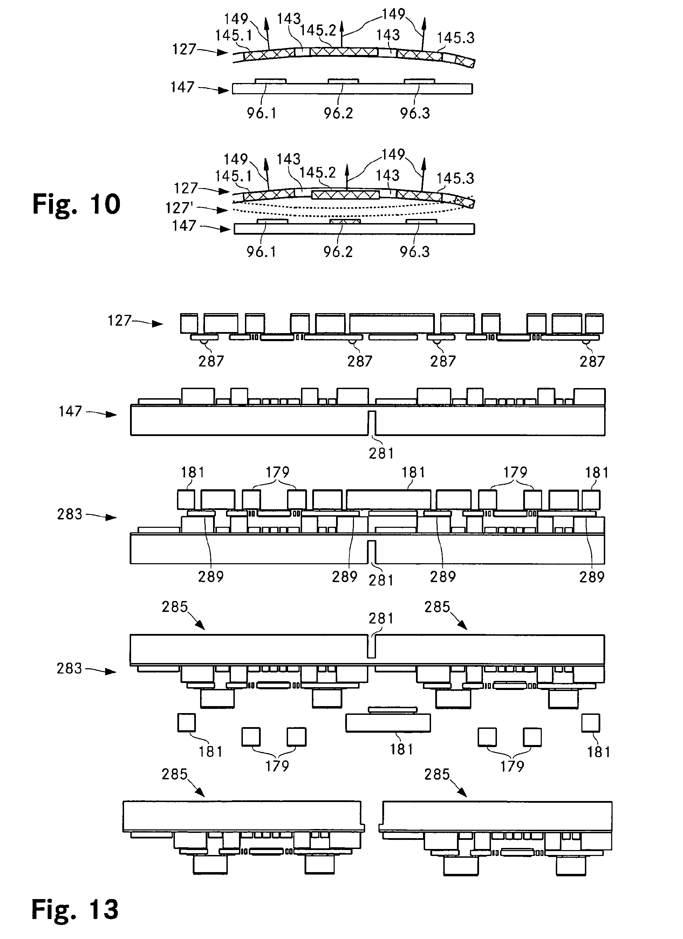

In Fig. 10 ist ein kleiner Ausschnitt aus dem Querschnitt eines Wafersandwiches des Spiegelchips 127 aus Fig. 8 und des Elektrodenchips 147 aus Fig. 9 dargestellt. Die obere Darstellung in Fig. 10 zeigt dieses Wafersandwich ohne aktivierte Elektroden 96.1, 96.2, 96.3 während die untere Darstellung dieses Wafersandwich mit aktivierter Elektrode 96.2, zeigt. Der Spiegelchip 127 weist eine (übertrieben dargestellte) Wölbung auf, wie sie durch mechanische Spannungen (Temperaturänderung, Packaging) hervorgerufen werden kann.

Weiter sind die Zungen 145.1, 145.2, 145.3 mit den dazwischenliegenden Ausnehmungen 143 sowie jeweils einem Normalvektor 149 auf einen auf der jeweiligen Zunge 145 liegenden Spiegel erkennbar. Durch die Wölbung weisen diese Normalvektoren 149 in leicht unterschiedliche Richtungen. Es ist jedoch zu beachten, dass diese Richtungsabweichungen wie auch der Versatz der mittleren Zunge 145.2 in Fig. 10 stark übertrieben dargestellt sind. Wird nun eine der Elektroden, beispielsweise die Elektrode 96.2 aktiviert, übt diese eine elektrostatische Kraft auf den Spiegel auf der Zunge 145.2 aus. Wäre der Spiegelchip 127 nicht durch die Ausnehmungen 143 in die Zungen 145.1, 145.2, 145.3 unterteilt, könnte sich eine undefinierte und unvorhersagbare Wölbungsänderung ergeben, welche in Fig. 10 durch die gestrichelt dargestellte Position 127' des Spiegelchips dargestellt ist. In diesem Fall würden die zugehörigen Normalvektoren in völlig verschiedene Richtungen zeigen wie zuvor und die Abstände zwischen den Elektroden und den Spiegeln würden sich stark verändern.

Da der Spiegelchip 127 jedoch die Ausnehmungen 143 umfasst, erfährt die mittlere Zunge 145.2 durch entsprechend gewählte Feder- und Basisabmessungen einen vernachlässigbar kleinen Versatz nach unten, die Membran des Spiegelchips 127 bleibt jedoch in derselben Position und die äusseren Zungen 145.1, 145.3 sind vollständig von der mittleren Zunge 145.2 entkoppelt. Ebenso bleibt die Ausrichtung der Spiegel auf den Zungen 145.1, 145.2, 145.3 und damit die Ausrichtung der Normalvektoren 149 wie auch der Abstand der Spiegel von den Elektroden 96.1, 96.2, 96.3 praktisch unverändert.

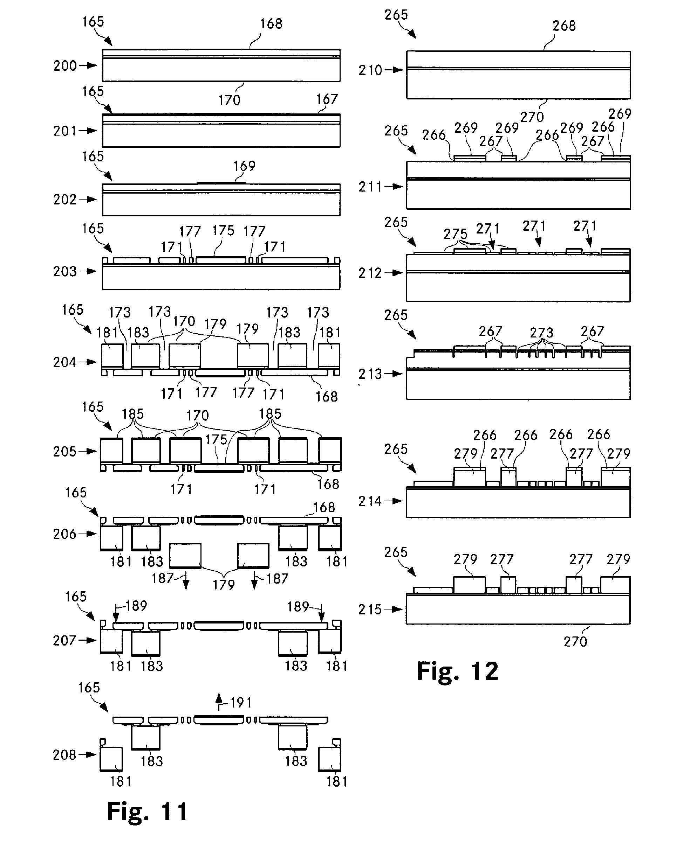

Fig. 11 zeigt eine schematische Darstellung der einzelnen Prozessschritte zur Herstellung eines Spiegelchips mit einer erfindungsgemässen Mikrospiegelanordnung bzw. mit einem oder gleichzeitig einer Vielzahl von Array solcher Mikrospiegelanordnungen.

Die Herstellung des Elektrodenchips beginnt auf seiner Vorderseite 168 in Schritt 200 mit einem SOI Wafer 165 dessen Deckschichtdicke typischerweise etwa zehn Mikrometer beträgt. Im Schritt 201 wird dieser Wafer 165 zuerst komplett metallisiert, d. h. mit einer Metallschicht 167 versehen. Im darauf folgenden Schritt 202 wird der Wafer 165 mit einem Lithographie-Ätzprozess so strukturiert, dass die Metallschicht 167 nur auf jenen Stellen 169 verbleibt, wo sich am Schluss Mikrospiegel befinden.

Im Schritt 203 werden mittels Fotolithographie die späteren Strukturen wie etwa die Spiegel 175, die Federn 171 und die Rahmen 177 auf der Deckschicht vorgegeben. Im Schritt 204 werden diese Strukturen mit DRIE (Deep Reactive Ion Etching-Tiefen Reaktives Ionen Ätzen) in das Silizium übertragen. Durch das sogenannte "Notching" erfolgt zudem ein Unterätzen der Strukturen an deren Kanten zum Oxid. Dadurch wird bei dünnen Strukturen, z. B. den späteren Federn 171, eine Verringerung der Strukturhöhe erreicht, ähnlich dem Delay-Mask-Prozess. Hingegen hat das "Notching" bei breiteren Strukturen wie den Spiegeln 175 lediglich ein Kantenbrechen zur Folge, hat jedoch auf die Dicke des Spiegels 175 insgesamt keinen Einfluss. D. h. das "Notching" ermöglicht die Reduzierung der Höhe der Federn 171 in Bezug auf die Höhe der Spiegel 175. Danach wird der Wafer 165 auf seiner Rückseite 170 bearbeitet.

Die Bearbeitung der Rückseite 170, ebenfalls noch im Schritt 204 dargestellt, startet wieder mit einem Lithographie-Prozess um die rückseitige Oberfläche des Spiegels 175 frei zu ätzen. Weiter werden Gräben 173 (Nuten) geätzt, um den Zugang für den HF Dampf in den nachfolgenden Schritten zu ermöglichen. Wichtig ist bei diesem Schritt 204, dass die Federn 171 komplett mit einem Schutzrahmen 179 abgedeckt bleiben. Weiter bleibt auf dem Wafer 165 zwischen den Chips ein Halterahmen 181 stehen um den Chip noch im Wafer 165 zu halten. Auch weitere Stützstrukturen 183 bleiben stehen.

Im Schritt 205 erfolgt die Metallisierung der Rückseite 170. Metall 185 wird auf der gesamten Rückseite 170 deponiert, sodass die rückseitigen Oberflächen der Spiegel 175, der Gräben 173 wie auch der Schutzrahmen 179, der Halterahmen 181 und der Stützstrukturen 183 mit Metall 185 bedeckt sind. Da die Federn 171 durch die Schutzrahmen 179 geschützt sind, wird auf den Federn 171 kein Metall abgeschieden.

Für den Schritt 206 wird der Wafer wieder umgedreht, sodass seine Vorderseite wieder nach oben zeigt. Schritt 206 zeigt den Einsatz von HF Dampf (Flusssäure Dampf). Durch diesen kann das Oxid (Isolierschicht) im Wafer 165 auch unter den Schutzrahmen 179 und den Halterahmen 181 entfernt werden. Hierbei ist entscheidend, wie gross die Überlappungen zwischen der Deckschicht und den herauszulösenden Strukturen ist, d. h. wie gross bzw. breit jene Flächen sind, mit welcher die Schutzrahmen 179 bzw. die Halterahmen 181 via das Oxid mit der Deckschicht verbunden sind. Die Überlappung wird bei den Schutzrahmen 179 kleiner gewählt als bei den Halterahmen 181. Bei den Stützstrukturen 183 ist die Überlappung am grössten. Dadurch wird beim Einwirken des HF Dampfs zuerst die Oxidschicht für die Schutzrahmen 179 durchätzt und diese lösen sich aus dem Wafer 165, was durch die Pfeile 187 angedeutet ist, während die Halterahmen 181 sowie die Stützstrukturen 183 noch mit dem Wafer 165 verbunden sind.

Lässt man den HF Dampf weiter einwirken, was im Schritt 207 dargestellt ist, lösen sich zeitlich verzögert auch die einzelnen Spiegelchips aus dem Waferrahmen und bleiben in diesem Rahmen lose liegen. D. h. die Chips fallen sozusagen auf den Halterahmen 181, was durch die Pfeile 189 angedeutet ist. Die Chips können nun einzeln aus dem Rahmen gepickt werden, ohne Krafteinwirkung auf die zerbrechlichen Mikrostrukturen. Da für diese Vereinzelung keine Kraft aufgewendet werden muss, werden die Mikrostrukturen nicht zerstört und die Ausbeute ist entsprechend sehr gross, d. h. es gibt nur einen sehr geringen Anteil an Ausschuss.

Nach der Vereinzelung der Chips im Schritt 207 können die Chips, welche dann frei im Waferrahmen liegen, einzeln herausgepickt, d. h. aus dem Waferrahmen herausgehoben, werden. Dies ist in Schritt 208 durch den Pfeil 191 dargestellt. Bei einem Wafer mit einem Durchmesser von 100 mm können auf diese Weise etwa 16 einzelne Chips mit jeweils einem Array von vier mal zweiundreissig Spiegeln hergestellt werden.

Will man nicht separat jeden einzelnen Spiegelchip mit jeweils einem einzelnen Elektrodenchip zusammensetzen, kann man mit der Vereinzelung der Chips auch zuwarten. Bei dieser Variante vereinzelt man die Chips nicht sofort, sondern fügt zunächst den gesamten Spiegelwafer mit einem zuvor gefertigten Elektrodenwafer zusammen (Waferbonding). Vor oder nach dem Waferbonding werden die Chipgrenzen des Elektrodenwafers mittels Wafersäge von der Rückseite her teilweise eingeschnitten. Nach dem Waferbonding wird das Wafersandwich dem HF Dampf ausgesetzt, sodass sich zuerst die Schutzrahmen 179 aus dem Wafer lösen. Bei anhaltendem Einwirken des HF Dampfes, löst sich auch das Oxid welches die Spiegelchips mit dem Waferrahmen verbindet auf und der Rahmen kann heraus gelöst werden. Vom verbleibenden Chipverbund können einzelne Chips durch leichten Druck vereinzelt und entnommen werden.

Fig. 12 zeigt eine schematische Darstellung der einzelnen Prozessschritte zur Herstellung eines Elektrodenchips mit einer bzw. einer Vielzahl von Elektrodenanordnungen.

In Schritt 210 beginnt die Herstellung des Elektrodenchips auf dessen Vorderseite 268 mit einem SOI Wafer 265 dessen Deckschichtdicke typischerweise etwa 150 Mikrometer ist. Der Wafer 265 wird zuerst nass-thermisch oxidiert.

Die resultierende Oxidschicht 266 beträgt z. B. etwa 0.5 Mikrometer. Im Schritt 211 wird diese Oxidschicht 266 mit Fotolithographie und einem darauffolgenden Ionenätzprozess strukturiert, sodass entsprechende Oxidstrukturen 267 sichtbar werden. Diese Oxidstrukturen 267 sind noch mit Fotolack 269 bedeckt und sie definieren die Wände jener Strukturen wie z. B. der späteren Abschirmung, welche die volle Strukturhöhe aufweisen. Danach wird der Fotolack 269 des ersten Fotolithographie-Schrittes entfernt, beispielsweise mittels Sauerstoffplasma.

Schritt 212 zeigt eine zweite Fotolithographie, mit welcher jene Bereiche 271 definiert werden, welche eine geringere Strukturhöhe aufweisen sollen. Dies sind beispielsweise die Bereiche 271 der späteren Elektroden, Leiterbahnen und Podeste für die Ausricht- und Abstandsvorrichtungen. Hierfür wird eine Schicht Fotolack 275 aufgebracht, wobei dort, wo sich später die Zwischenräume zwischen diesen Strukturen befinden, kein Fotolack aufgebracht wird.

Im nächsten Schritt 213 wird mittels DRIE die Deckschicht des Wafers 265 in jenen Bereichen, welche nicht von Fotolack 275 bedeckt sind, bis zu einer Tiefe von etwa einem Drittel der Gesamthöhe der Deckschicht geätzt, sodass schmale Schlitze 273 entstehen, welche der späteren Elektrodenhöhe entsprechen, d. h. etwa 30 bis 40 Mikrometer hoch sind.

Danach wird der Fotolack 275 der zweiten Lithographie entfernt und im Schritt 214 wird mittels DRIE bis auf die innenliegende Isolationsschicht des Wafers 265 fertig geätzt. Dies legt bereits die Abschirmungen 277 und weitere Verbindungsstrukturen 279 frei, wobei diese nach wie vor von der Oxidschicht 266 bedeckt sind.

Im letzten Schritt 215 wird schliesslich noch diese Oxidschicht 266 entfernt, sodass der Elektrodenchip fertig strukturiert ist. Die Rückseite 270 des Wafers 265 wird nicht strukturiert.

Zur Montage eines Spiegelchips und eines entsprechenden Elektrodenchips gibt es mehrere Varianten. Bei einer ersten Variante werden die Chips eines Wafers einzeln zusammengefügt und miteinander verbunden. Die Chips beider Wafer werden vor der Montage vereinzelt. Beim Spiegelwafer erfolgt dies wie oben beschrieben durch HF Dampf. Beim Elektrodenwafer wird die Rückseite des Wafers (Substratseite) eingeschnitten.

Das Vereinzeln der Chips erfolgt durch Brechen mittels leichtem Druck auf die jeweiligen Elektroden-chips. Da diese Elektrodenchips keine solch zerbrechlichen Strukturen wie die Federn der Spiegelchips aufweisen, kann dies gefahrlos gemacht werden. Danach wird eine Glasfaser mit einem Durchmesser von ca. 140 Mikrometer in die entsprechenden Nuten des Elektrodenchips gedrückt und dort von den Blattfedern in Position gehalten. Im nächsten Schritt wird der MEMS Chip, d. h. der Spiegelchip mit seiner Vorderseite auf dem Elektrodenchip so positioniert, dass die Fasernut am MEMS Chip auf der Glasfaser einrastet. Dies erlaubt ein passives Ausrichten der beiden Chips miteinander. Auf diese Weise wird eine Präzision erreicht, die besser ist als ein Mikrometer.

Abschliessend werden die Chips gegeneinander fixiert, beispielsweise mit UV härtendem Epoxy oder einem Lötprozess. Da die Faser, wie bereits vorgängig beschrieben, auf einem Podest aufliegt, das die gleiche Höhe wie die Elektroden hat, ist der Abstand zwischen Mikrospiegel und Elektrodenoberfläche ausschliesslich vom Durchmesser der Glasfaser bestimmt. Der Vorteil hierbei ist, dass Variationen im "Delay-mask Prozess" zu unterschiedlichen Elektrodenhöhen führen können, der Abstand zwischen Mikrospiegel und Elektrodenoberfläche aber trotzdem immer gleich bleibt.

Bei einer zweiten Variante werden die beiden Wafer zusammengefügt und miteinander verbunden (Wafer Level Montage), bevor die Chips vereinzelt werden. Das Design von MEMS Chip und Elektrodenchip erlaubt dies. Diese Montagevariante ist in Fig. 13 dargestellt. Bevor die Schutzrahmen 179 mit HF Dampf aus den MEMS Chips gelöst werden, sind die Spiegelwafer sehr robust und die feinen MEMS Strukturen (z. B. die Federn 171) werden bei zusätzlichen Prozessschritten nicht beschädigt. Das erlaubt es beispielsweise Lot oder einen anderen Werkstoff für Tieftemperatur "Waferbonding" aufzubringen. Das Lot wird z. B. auf den verbleibenden Stellen auf der Rückseite des Spiegelwafers (ausserhalb der Spiegelbereiche) als Lotkügelchen aufgebracht. Anschließend erfolgt das Wafer Level Bonding zwischen MEMS Wafer und Elektrodenwafer, wobei entsprechend den aufgebrachten Lotkügelchen Lötverbindungen zu den entsprechenden Verbindungsstrukturen 279 des Elektrodenwafers hergestellt werden. Andere Bondingmöglichkeiten sind z. B. Gold Eutektisches Bonding oder Klebeverbindungen. Allerdings müssen die auf diese Weise hergestellten Verbindungen den nachfolgenden HF Dampf genügend robust überstehen.

In dem dargestellten Beispiel in Fig. 13 werden auf dem Elektrodenchip 147 vor dem Waferbonding die Chipgrenzen 281 mittels Wafersäge von der Rückseite, d. h. der Substratseite des Elektrodenchips 147 her eingeschnitten. Danach werden der Spiegelchip 127 und der Elektrodenchip 147 zusammengefügt, indem Lotkügelchen 287 auf entsprechende Stellen der Vorderseite des Spiegelchips 127 aufgebracht und die beiden Chips danach zusammengelötet werden. Dadurch entsteht das Wafersandwich 183, wobei die entsprechenden Lötverbindungen 289 in Fig. 13 markiert sind.

Erst danach wird das Wafersandwich 283 dem HF Dampf ausgesetzt, sodass sich zuerst die Schutzrahmen 179 und zeitlich versetzt die Halterahmen 181 aus dem Wafersandwich 283 lösen. D. h. zunächst fallen die Schutzrahmen 179 heraus und danach werden zeitlich versetzt die Verbindungen der Halterahmen 181 zu den MEMS-Elektroden-Chips 285 gelöst und der Halterahmen 181 kann entfernt werden. Durch leichten Druck brechen die einzelnen MEMS-Elektroden-Chips 285 entlang der Chipgrenzen 281 auseinander und können vom verbleibenden Chipverbund auf diese Weise vereinzelt und schliesslich entnommen werden.

Diese zweite Variante erlaubt die genaue Positionierung aller Chips in einem einzigen Arbeitsgang. Durch das Verbinden von Spiegel-Chip und Elektrode mit Lötzinn erfolgt gleichzeitig eine elektrische Kontaktierung von Abschirmung und Mikrospiegel auf Masse. Diese Variante der Montage der Chips ist somit äusserst wirtschaftlich und erlaubt die Herstellung solcher Mikrospiegel-Chips in grossen Mengen zu günstigen Preisen.

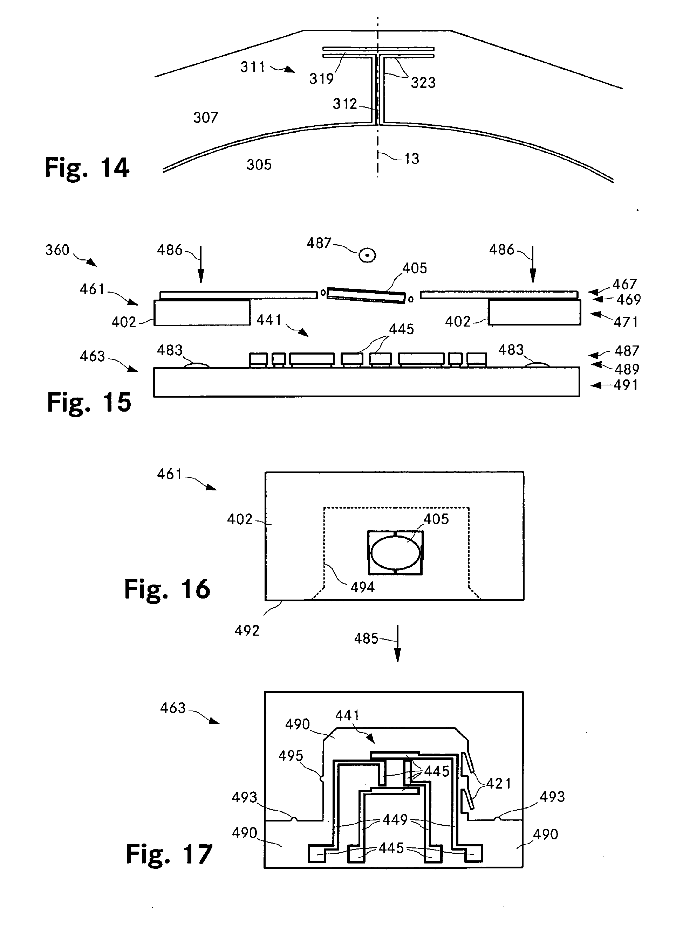

In Fig. 14 ist eine weitere Ausführungsform einer Torsionsfeder 31 zur Verbindung des Spiegels 305 mit dem Rahmen 307 dargestellt. Der Torsionsbalken 312 dieser Torsionsfeder 311, welcher wiederum die Drehachse 13 des Spiegels 305 definiert, ist zusammen mit dem Verbindungsstück 319 zum Rahmen 307 T-förmig ausgebildet, wobei der Torsionsbalken 312 den Längsbalken und das Verbindungsstück 319 den Querbalken des T's bilden. Der Torsionsbalken 312 ist an seinem unteren Ende (gemäss Darstellung in Fig. 14) mit dem Spiegel 305 verbunden. Sein oberes Ende ist entsprechend nicht direkt mit dem Rahmen 307, sondern mittig mit dem Verbindungsstück 319 verbunden, dessen beide Enden dann mit dem Rahmen 307 verbunden sind. Der Rahmen 307 umfasst hierfür eine T-förmige Ausnehmung 323, wobei der Torsionsbalken 312 im Längsbalken der T-förmigen Ausnehmung 323 und das Verbindungsstück 319 im Querbalken der Ausnehmung 323 verläuft. Durch diese Anordnung wird erreicht, dass Kräfte, die in Richtung der Drehachse 13 auf die Spiegelanordnung wirken, durch eine Verformung des Verbindungsstücks 319 kompensiert werden können. Auf diese Weise haben derartige Kräfte keinen Einfluss auf die Funktionalität der Spiegelvorrichtung, insbesondere auf die Aktuierung des Spiegels 305. Solche Kräfte können beispielsweise durch Spannungen im Torsionsbalken 312 selber entstehen, welche etwa durch den Herstellungsprozess hervorgerufen werden.

Die Figuren 15-17 zeigen eine weitere Montagevariante bzw. eine Ausricht- und Abstandsvorrichtung für den Spiegelchip 461 und den Elektrodenchip 463 einer Mikrospiegelvorrichtung 460, bei welcher sichergestellt ist, dass die einander zugeordneten Spiegel 405 und Elektrodenanordnung 441 einander auch tatsächlich präzise gegenüberliegen und den gewünschten Abstand voneinander einhalten.

Fig. 15 zeigt einen schematisch dargestellten Querschnitt durch die Mikrospiegelvorrichtung 460, wobei der Spiegelchip 461 und der Elektrodenchip 463 der Einfachheit halber getrennt voneinander statt zusammengefügt dargestellt sind. Die Fig. 16 und 17 zeigen jeweils eine Draufsicht auf den Spiegelchip 461 bzw. den Elektrodenchip 463 von der Deckschicht-Seite her.

Der Spiegelchip 461 wie der Elektrodenchip 463 sind wiederum jeweils aus einem SOI Wafer mit je einer Substratschicht 471,491, einer Isolationsschicht 469, 489 sowie einer Deckschicht 467, 487 hergestellt. Der Spiegelchip 461 umfasst wiederum den Spiegel 405 samt Aufhängung und der Elektrodenchip 463 eine Elektrodenanordnung 441 mit einer Mehrzahl von Elektroden 445, welche über Leiterbahnen 449 mit entsprechenden bonding pads 400 verbunden sind.

Im Gegensatz zur Mikrospiegelvorrichtung aus Fig. 6 sind der Spiegelchip 461 und der Elektrodenchip 463 hier derart angeordnet, dass die Substratschicht 471 des Spiegelchips 461 der Deckschicht 487 des Elektrodenchips 463 zugewandt ist.

Zur gegenseitigen Ausrichtung des Spiegelchips 461 und des Elektrodenchips 463 umfasst der Spiegelchip 461 seitlich vom Spiegel 405 und an der dem Elektrodenchip 463 zugewandten Seite einen Rahmenbereich 402, der aus der Substratschicht 471 herausstrukturiert ist. Dieser Rahmenbereich 402 entspricht quasi den Bereichen 102 aus Fig. 6, wobei diese Rahmenbereiche 402 im Gegensatz zu Fig. 6 bei Fig. 15 auf der Unterseite des Spiegelchips 461 und nicht auf der Oberseite des Elektrodenchips 463 angeordnet sind.

Beim Zusammenfügen von Spiegelchip 461 und Elektrodenchip 463 wird nun die Unterseite dieses Rahmenbereichs 402 in Kontakt mit der Oberseite der Substratschicht 491 gebracht, sodass der Abstand H der Elektroden 445 von der Unterseite des Spiegels 405 wie folgt definiert ist, bzw. durch geeignete Wahl der entsprechenden Schichtdicken wie gewünscht eingestellt werden kann:

$$H = (H_{SS} + H_{SI}) - (H_{ED} + H_{EI})$$

wobei $H_{SS}$ die Schichtdicke der Substratschicht 471, $H_{SI}$, die Schichtdicke der Isolationsschicht 469, $H_{ED}$ die Schichtdicke der Deckschicht 487 und $H_{EI}$ die Schichtdicke der Isolationsschicht 469 bezeichnen. Je nachdem, wie präzise der Abstand H bzw. die Angaben darüber sein müssen, kann allenfalls noch die Schichtdicke der Metallbeschichtung des Spiegels 405 berücksichtigt werden, indem diese noch substrahiert wird. Man kann für H auch folgende Näherung verwenden, Indem man die Schichtdicken der beiden Substratschichten vernachlässigt:

$$H = H_{SS} - H_{ED}$$

Das Zusammenfügen erfolgt, indem der Spiegelchip 461 in Richtung der Pfeile 486 auf den Elektrodenchip 463 gelegt und dann in Richtung des Pfeils 485 auf den Elektrodenchip 463 geschoben wird.

Für die horizontale Ausrichtung sind an einem der beiden Chips, in diesem Beispiel am Spiegelchip 461, zwei Referenzflächen 492, 494 und am jeweils anderen Chip, in diesem Beispiel am Elektrodenchip 463, Referenzpunkte 493, 495 vorgesehen. Die Referenzflächen 492, 494 sind beispielsweise auf einer Aussen- bzw. einer Innenseite des Rahmenbereichs 402 des Spiegelchips 461 und die Referenzpunkte 493, 495 beispielsweise auf den Aussenseiten der Strukturen 490 des Elektrodenchips 463 angeordnet. Die Referenzflächen 492, 494 stehen vorzugsweise in einem Winkel verschieden von 0 Grad zueinander. Im vorliegenden Beispiel stehen sie senkrecht zueineinader. Die im Querschnitt als Referenzpunkte 493, 495 dargestellten Strukturen sind an sich längliche Erhebungen in Richtung der Draufsicht auf den Elektrodenchip 463.

Beim Zusammenfügen der Chips dienen die Referenzpunkte 493, 495 als Auflage für die Referenzflächen 492, 494 des Spiegelchips. Durch die drei Referenzpunkte 493, 495, an welchen die Referenzflächen 492, 494 anliegen, ergibt sich eine geometrisch definierte drei-Punkt-Auflage, wobei Spiegelchip 461 und Elektrodenchip 463 durch auf der gegenüberliegenden Seite des Referenzpunkts 495 angebrachte Federn, beispielsweise Blattfedern 421, aneinandergepresst werden.

Da die Abstände des Spiegels 405 bzw. der Elektroden 445 zu diesen Referenzflächen genau definiert und bekannt sind bzw. durch geeignetes Bearbeiten der Wafer nach Wunsch eingestellt werden können, sind der Spiegel 405 und die Elektroden 445 nach dem Zusammenfügen von Spiegelchip 461 und Elektrodenchip 463 präzise in der gewünschten Art und Weise gegenseitig ausgerichtet und werden durch die Blattfedern 421 auch in ihren Positionen gehalten.

Durch diese Ausricht- und Abstandsvorrichtung ist somit gewährleistet, dass die gegenseitige Lage von Spiegel 405 und Elektrodenanordnung 441, d. h. deren horizontale Ausrichtung sowie deren Abstand, genau wie gewünscht sind.

Es wäre natürlich auch möglich, die Referenzflächen am Elektrodenchip und die Referenzpunkte am Spiegelchip oder Referenzflächen anstelle von Referenzpunkten vorzusehen.

Fig. 15 zeigt noch einen weiteren Aspekt, nämlich das Verbinden von Spiegelchip 461 und Elektrodenchip 463. Hierfür werden beispielsweise auf der Substratschicht 491 des Elektrodenchips 463 zwei Lotpunkte bzw. Lothöcker 483 aus beispielsweise Gold oder einem anderen bekannten Lot aufgebracht. Beim Zusammenfügen der beiden Chips wird das Material dieser Höcker in bekannter Weise verflüssigt, wobei die beiden Chips nach dem Verfestigen des Lots fest miteinander verbunden sind. Da das Lot Auswirkungen auf den Abstand von Spiegel 405 und Elektroden 445 haben kann, kann dies bereits beim Design der Mikrospiegelvorrichtung berücksichtigt werden. Eine andere Möglichkeit zum Verbinden der beiden Chips ist die sogenannte "Gold-Stud-Bump" Technologie, bei welcher ein Goldkontakt auf die Substratschicht 491 aufgebracht wird. Das Verbinden der Chips erfolgt dann als eine Art Bonding mittels Ultraschall (oder mit Schallwellen anderer Frequenzen wie z. B. im Bereich von Mikrowellen), ähnlich dem bereits erwähnten Flip-Chip-Bonding. Durch diese Verbindungsarten können die beiden Chips gleichzeitig auch elektrisch miteinander kontaktiert werden.

Solche Mikrospiegel-Chips können bei vielen verschiedenen Anwendungen eingesetzt werden. Eine Hauptanwendung besteht in der Telekommunikation, d. h. in der optischen Übertragung von Signalen. Hier werden die signaltragenden Lichtstrahlen, welche typischerweise mittels einer Lichtfaser auf einen solchen Mikrospiegel gerichtet sind, vom Mikrospiegel je nach Ansteuerung der Elektroden und entsprechender Drehstellung des Spiegels um seine Drehachsen in eine aus einer Mehrzahl von weiteren Lichtfasern eingekoppelt. Auf diese Weise lassen sich z. B. sogenannte X-Connects (gesprochen: crossconnects), optische Matrix-Schalter, herstellen. Mit solchen Matrix-Schaltern kann das Licht von jeder von beispielsweise 50 Lichtfasern mit einem Mikrospiegel umgelenkt und steuerbar in irgendeine dieser 50 Lichtfasern eingekoppelt werden. Solche X-Connects werden beispielsweise in der Satellitentechnik eingesetzt, um hochfrequente Datenverbindungen einfach umprogrammieren, d. h. rekonfigurieren, zu können.

Eine weitere Anwendung in der Datenübertragung besteht im sogenannten Routing von Wellenlängen in optischen Netzwerken, wo die zu übertragenden Daten verschiedenen Wellenlängen eines Lichtstrahls aufmoduliert sind (Wavelength Division Multiplexing).

Solche Mikrospiegelarrays können auch bei sogenannten ROADM (Reconfigurable Optical Add Drop Multiplexer) verwendet werden, um aus einer Glasfaser ebenfalls eine oder eine Mehrzahl bestimmter Wellenlängen herauszufiltern.

Derartige Mikrospiegel können auch in der Satellitenkommunikation, beispielsweise von einem Satelliten zu einem Flugzeug oder umgekehrt, verwendet werden. Solche Kommunikationsverbindungen können durch Vibrationen, wie sie z. B. bei fliegenden Flugzeugen vorhanden sind, empfindlich gestört werden. Mit Hilfe solcher Mikrospiegel lassen sich diese Vibrationen herausfiltern und stabilisieren, wodurch die Kommunikation verbessert werden kann.

Die Spektroskopie ist eine weitere Anwendungsmöglichkeit solcher Mikrospiegelarrays. Hierbei wird das Licht einer Lichtquelle beispielsweise mit einem Prisma in seine Spektralfarben aufgefächert. Mit einem Mikrospiegelarray kann dann jeweils eine gewünschte Wellenlänge (oder auch mehrere Wellenlängen) gezielt ausgewählt und an einen bestimmten Ort umgelenkt werden, während die restlichen Wellenlängen nicht weiterverarbeitet werden.

Solche Mikrospiegelarrays können aber noch weit vielfältiger eingesetzt werden, beispielsweise bei der optischen Kohärenztomographie.

Zusammenfassend ist festzustellen, dass es die Erfindung erlaubt, eine Mikrospiegelanordnung zu schaffen, bei welcher jeder Spiegel jeweils entkoppelt um eine oder beide seiner Drehachsen gedreht werden kann, welche driftfrei arbeitet und bei welcher benachbarte Elektroden und Leiterbahnen keine Auswirkung auf das Schaltverhalten eines Mikrospiegels haben (kein Übersprechen). Dies erlaubt es, die Mikrospiegelanordnung rückkopplungsfrei auszubilden, sodass deren Herstellung nicht nur weniger aufwändig und daher kostengünstiger ist, sondern die gesamte Anordnung auch weniger Platz beansprucht als herkömmliche Mikrospiegelanordnungen. Dennoch können viele solcher Mikrospiegel in einem Array mit einer sehr hohen Packungsdichte angeordnet werden.

**Patentansprüche**

1. Mikrospiegelvorrichtung mit einer aus einer Halbleiterschicht, insbesondere einer Siliziumschicht (3), herausstrukturierten Spiegelanordnung (21), welche eine Basisstruktur (9), einen Mikrospiegel (25) und eine zwischen der Basisstruktur (9) und dem Mikrospiegel (25) angeordnete Rahmenstruktur (7) umfasst, der Mikrospiegel (25) über zwei eine erste Drehachse (13) des Mikrospiegels (25) definierende Gelenkverbindungen mit der Rahmenstruktur (7) und die Rahmenstruktur (7) über zwei eine zweite Drehachse (17) definierende Gelenkverbindungen mit der Basisstruktur (9) verbunden ist, wobei die beiden Drehachsen (13, 17) einen Winkel grösser als 0 Grad einschliessen, **dadurch gekennzeichnet, dass** die Gelenkverbindungen, welche die erste Drehachse (13) definieren, je eine Torsionsfeder (31.1, 31.2) und die Gelenkverbindungen, welche die zweite Drehachse (17) definieren, je eine Biegefeder (35.1, 35.2) umfassen.

2. Mikrospiegelvorrichtung nach Anspruch 1, wobei jede Biegefeder (35.1, 35.2) genau einen senkrecht zur zweiten Drehachse angeordneten Biegebalken (36) umfasst, welcher an einem ersten Ende mit der Rahmenstruktur (7) und an einem zweiten Ende mit der Basisstruktur (9) verbunden ist, sodass mechanische Spannungen in Richtung der zweiten Drehachse (17) durch einen Versatz der Biegebalken (36) kompensierbar sind.

3. Mikrospiegelvorrichtung nach einem der Ansprüche 1-2, wobei jede Torsionsfeder (31.1, 31.2) genau einen parallel zur ersten Drehachse angeordneten Torsionsbalken umfasst, welcher an einem ersten Ende mit dem Mikrospiegel (25) und an einem zweiten Ende mit der Rahmenstruktur (7) verbunden ist.

4. Mikrospiegelvorrichtung nach einem der Ansprüche 1-3, wobei der Mikrospiegel auf wenigstens einer Oberfläche der Halbleiterschicht eine Metallbeschichtung (39) aufweist und die Torsionsfedern (31.1, 31.2) und die Biegefedern (35.1, 35.2) frei von der Metallbeschichtung (39) sind.

5. Mikrospiegelvorrichtung nach einem der Ansprüche 1-4, wobei die Halbleiterschicht eine Deckschicht eines ersten SOI Wafers ist, welcher weiter eine Isolationsschicht und eine Substratschicht umfasst.

6. Mikrospiegelvorrichtung nach Anspruch 5, wobei sie eine aus einer Deckschicht eines zweiten SOI Wafers herausstrukturierte Elektrodenanordnung (41) mit einer Mehrzahl von Elektroden (45, 46, 47) umfasst, der zweite SOI Wafer weiter eine Isolationsschicht und eine Substratschicht umfasst, die Spiegelanordnung (21) und die Elektrodenanordnung (41) derart aneinander angelegt sind, dass die von der Isolationsschicht des ersten SOI Wafers abgewandte Oberfläche der Deckschicht und die von der Isolationsschicht des zweiten SOI Wafers abgewandte Oberfläche der Deckschicht einander zugewandt sind und dass die Elektroden und der Mikrospiegel einander gegenüber liegen und einen definierten Abstand zueinander aufweisen, sodass der Mikrospiegel elektrostatisch durch Anlegen einer elektrischen Spannung an zumindest eine der Elektroden (45, 46, 47) um jeweils wenigstens eine der beiden Drehachsen (13, 17) drehbar ist.

7. Mikrospiegelvorrichtung nach Anspruch 6, wobei die Elektrodenanordnung (41) zumindest teilweise von einer aus der Deckschicht des zweiten SOI Wafers herausstrukturierten Abschirmung (51) umgeben ist, um die Elektroden (45, 46, 47) von externen elektrischen Feldern abzuschirmen.

8. Mikrospiegelvorrichtung nach einem der Ansprüche 6-7, wobei sie eine Abstands- und Ausrichtvorrichtung umfasst, welche auf der von der Isolationsschicht des ersten SOI Wafers abgewandten Oberfläche der Deckschicht eine erste Ausnehmung (111) und auf der von der Isolationsschicht des zweiten SOI Wafers abgewandten Oberfläche der Deckschicht eine zweite Ausnehmung (113) sowie einen Abstandshalter (115) umfasst, wobei der Abstandshalter (115) in einen durch die beiden Ausnehmungen (111, 113) gebildeten Freiraum zwischen bzw. in den beiden Deckschichten der beiden SOI Wafer eingefügt ist, und der Abstandshalter (115) insbesondere als Glasfaser mit einem kreisscheibenförmigen Querschnitt ausgebildet ist.

9. Mikrospiegelarray mit einer Mehrzahl von in einem Array angeordneten Mikrospiegelvorrichtungen gemäss einem der Ansprüche 1-8.

**10.** Mikrospiegelarray nach Anspruch 9, wobei sämtliche Spiegelanordnungen (21) der Mikrospiegelvorrichtungen aus einer Deckschicht eines ersten SOI Wafers herausstrukturiert sind, und, falls die Mikrospiegelvorrichtungen eine Elektrodenanordnung (41) umfassen, sämtliche dieser Elektrodenanordnungen (41) aus einer Deckschicht eines zweiten SOI Wafers herausstrukturiert sind, wobei beide SOI Wafer weiter eine Substratschicht und eine zwischen der Substratschicht und der Deckschicht angeordnete Isolationsschicht umfassen, die Spiegelanordnungen (21) mit den Elektrodenanordnungen (41) derart aneinander angelegt sind, dass die von der Isolationsschicht des ersten SOI Wafers abgewandte Oberfläche der Deckschicht und die von der Isolationsschicht des zweiten SOI Wafers abgewandte Oberfläche der Deckschicht einander zugewandt sind und dass jeweils eine Elektrodenanordnung (41) und eine Spiegelanordnung (21) einander gegenüber liegen und einen definierten Abstand zueinander aufweisen.

**11.** Mikrospiegelarray nach einem der Ansprüche 9-10, wobei das Array vier Reihen (130, 131, 132, 133) von Mikrospiegelvorrichtungen (21) mit parallelen ersten (13) und zusammenfallenden zweiten Drehachsen (17) und wenigstens zwei Spalten (135) von Mikrospiegelvorrichtungen (21) mit zusammenfallenden ersten (13) und parallelen zweiten Drehachsen (17) umfasst, und die Deckschicht des ersten SOI Wafers zur Kompensation von mechanischen Spannungen in Richtung der ersten Drehachsen (13) zwischen der zweiten (131) und der dritten Reihe (132) von Mikrospiegelvorrichtungen (21) eine Ausnehmung (141) aufweist und wobei die Deckschicht des ersten SOI Wafers zur Kompensation von mechanischen Spannungen in Richtung der zweiten Drehachsen (17) zwischen den Mikrospiegelvorrichtungen (21) eine Ausnehmung (143) aufweist.

**12.** Verfahren zur Herstellung einer Mikrospiegelvorrichtung gemäss einem der Ansprüche 1 bis 8, wobei eine Spiegelanordnung (21) mit einer Basisstruktur (9), einem Mikrospiegel (25) und einer zwischen der Basisstruktur (9) und dem Mikrospiegel (25) angeordneten Rahmenstruktur (27) aus einer Halbleiterschicht, insbesondere einer Siliziumschicht, sowie zwei eine erste Drehachse (13) des Mikrospiegels (25) definierende, den Mikrospiegel (25) mit der Rahmenstruktur (27) verbindende Gelenkverbindungen und zwei eine zweite Drehachse (17) definierende, die Rahmenstruktur (27) mit der Basisstruktur (9) verbindende Gelenkverbindungen aus der Halbleiterschicht herausstrukturiert werden, wobei die beiden Drehachsen (13, 17) einen Winkel grösser als 0 Grad einschliessen, **dadurch gekennzeichnet, dass** die Gelenkverbindungen, welche die erste Drehachse (13, 17) definieren, als eine je eine Torsionsfeder (31.1, 31.2) umfassende Gelenkverbindung und die beiden anderen Gelenkverbindungen, welche die zweite Drehachse (17, 13) definieren, als eine je eine Biegefeder (35.1, 35.2) umfassende Gelenkverbindung aus der Halbleiterschicht herausstrukturiert werden.

**13.** Verfahren nach Anspruch 12, wobei wenigstens eine Oberfläche der Halbleiterschicht des Mikrospiegels (25) mit einer Metallbeschichtung (39) versehen wird, wobei die Torsionsfedern (31.1, 31.2) und die Biegefedern (35.1, 35.2) frei von der Metallbeschichtung (39) gehalten werden.

**14.** Verfahren nach einem der Ansprüche 12-13, wobei die Spiegelandordnung (21) aus einer als Deckschicht bezeichneten Halbleiterschicht eines SOI Wafers herausstrukturiert wird, wobei der SOI Wafer weiter eine Isolationsschicht und eine Substratschicht umfasst.

**15.** Verfahren nach einem der Ansprüche 12-14, wobei aus einer Deckschicht eines zweiten SOI Wafers, welcher weiter eine Isolationsschicht und eine Substratschicht umfasst, eine Elektrodenanordnung (41) mit einer Mehrzahl von Elektroden (45, 46, 47) herausstrukturiert wird, die Spiegelanordnung (21) und die Elektrodenanordnung (41) derart aneinander angelegt werden, dass die Elektroden (45, 46, 47) und der Mikrospiegel (25) einander gegenüber liegen und einen definierten Abstand zueinander aufweisen.

**16.** Verfahren nach einem der Ansprüche 12-15, wobei eine Mehrzahl von Spiegelanordnungen (21) aus der Deckschicht des ersten SOI Wafers herausstrukturiert werden, eine der Mehrzahl von Spiegelanordnungen (21) entsprechende Anzahl von Elektrodenanordnungen (41) aus der Deckschicht eines zweiten SOI Wafers herausstrukturiert werden, wobei die Spiegelanordnungen (21) und die Elektrodenanordnungen (41) derart aneinander angelegt werden, dass jeweils eine Elektrodenanordnung (41) und eine Spiegelanordnung (21) einander gegenüber liegen und einen definierten Abstand zueinander aufweisen.

**Fig. 1**

**Fig. 2**

**Fig. 3**

**Fig. 4**

**Fig. 5**

Fig. 6

Fig. 7

Fig. 8

Fig. 9

**Fig. 10**

**Fig. 13**

EP 2 028 525 A1

**Fig. 11**

**Fig. 12**

23

**Fig. 14**

**Fig. 15**

**Fig. 16**

**Fig. 17**

**Europäisches Patentamt**
**European Patent Office**
**Office européen des brevets**

# EUROPÄISCHER RECHERCHENBERICHT

**Nummer der Anmeldung**

EP 08 40 5191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 806 613 A (SAMSUNG ELECTRONICS CO LTD [KR]) 11. Juli 2007 (2007-07-11) <br> * Abbildungen * <br> * Absatz [0027] - Absatz [0042] * <br> ----- | 1,9,12 | INV. <br> G02B26/08 |
| A | WO 2005/006052 A (KONINKL PHILIPS ELECTRONICS NV [NL]; WILLEMSEN OSCAR H [NL]; HOLTSLAG) <br> 20. Januar 2005 (2005-01-20) <br> * Zusammenfassung * <br> * Abbildungen 2,3a,3b,5 * <br> * Seite 5, Zeile 33 - Seite 8, Zeile 31 * <br> ----- | 1,3,4,9, 12,13 | |
| A | JP 2004 029425 A (DENSO CORP) <br> 29. Januar 2004 (2004-01-29) <br> * Zusammenfassung; Abbildungen * <br> ----- | 1-16 | |
| A | EP 1 197 779 A (NIPPON TELEGRAPH & TELEPHONE [JP]) <br> 17. April 2002 (2002-04-17) <br> * Zusammenfassung; Abbildungen * <br> ----- | 1-16 | |
| A | US 2004/099739 A1 (KUO TING-TUNG [US] ET AL FU YEE-CHUNG [US] ET AL) <br> 27. Mai 2004 (2004-05-27) <br> * Zusammenfassung; Abbildung 3c * <br> * Absatz [0054] - Absatz [0062] * <br> ----- | 1-16 | RECHERCHIERTE SACHGEBIETE (IPC) <br><br> G02B |
| A | US 6 337 760 B1 (HUIBERS ANDREW G [US] ET AL) 8. Januar 2002 (2002-01-08) <br> * Abbildungen 3,5,9-14 * <br> ----- | 1-16 | |
| A | US 5 661 591 A (LIN TSEN-HWANG [US] ET AL) 26. August 1997 (1997-08-26) <br> * Abbildungen 2,7-11 * <br> * Zusammenfassung * <br> ----- <br> -/-- | 1-16 | |

Der vorliegende Recherchenbericht wurde für alle Patentansprüche erstellt

| Recherchenort | Abschlußdatum der Recherche | Prüfer |
|---|---|---|
| München | 18. November 2008 | Windecker, Robert |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes
Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 08 40 5191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2007/017994 A1 (WOLTER ALEXANDER [DE] ET AL) 25. Januar 2007 (2007-01-25) * Zusammenfassung; Abbildungen * ----- | 1-16 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 18. November 2008 | Windecker, Robert |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 40 5191

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1806613 | A | 11-07-2007 | JP | 2007188073 | A | 26-07-2007 |
| | | | US | 2007158552 | A1 | 12-07-2007 |
| WO 2005006052 | A | 20-01-2005 | AT | 361481 | T | 15-05-2007 |
| | | | CN | 1823290 | A | 23-08-2006 |
| | | | DE | 602004006284 | T2 | 03-01-2008 |
| | | | JP | 2007519023 | T | 12-07-2007 |
| | | | KR | 20060035747 | A | 26-04-2006 |
| | | | US | 2006250675 | A1 | 09-11-2006 |
| JP 2004029425 | A | 29-01-2004 | JP | 4003552 | B2 | 07-11-2007 |
| EP 1197779 | A | 17-04-2002 | US | 2002041455 | A1 | 11-04-2002 |
| US 2004099739 | A1 | 27-05-2004 | CN | 1739053 | A | 22-02-2006 |
| US 6337760 | B1 | 08-01-2002 | KEINE | | | |
| US 5661591 | A | 26-08-1997 | JP | 9127439 | A | 16-05-1997 |
| US 2007017994 | A1 | 25-01-2007 | CN | 1896791 | A | 17-01-2007 |
| | | | DE | 102005033800 | A1 | 01-02-2007 |

EPO FORM P0461

Für nähere Einzelheiten zu diesem Anhang : siehe Amtsblatt des Europäischen Patentamts, Nr.12/82

**EP 2 028 525 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1057068 A1
- US 6935759 B1
- WO 2005006052 A1